Europäisches Patentamt

European Patent Office

Office européen des brevets

(19)

(11) Veröffentlichungsnummer: **0 222 260**
**B1**

(12) **EUROPÄISCHE PATENTSCHRIFT**

(45) Veröffentlichungstag der Patentschrift:
**19.12.90**

(51) Int. Cl.⁵: **F01L 7/10**

(21) Anmeldenummer: **86115033.2**

(22) Anmeldetag: **29.10.86**

(54) Brennkraftmaschine.

(30) Priorität: **14.11.85 DE 3540441**

(43) Veröffentlichungstag der Anmeldung:
**20.05.87 Patentblatt 87/21**

(45) Bekanntmachung des Hinweises auf die Patenterteilung:
**19.12.90 Patentblatt 90/51**

(84) Benannte Vertragsstaaten:
**AT BE CH DE ES FR GB GR IT LI LU NL SE**

(56) Entgegenhaltungen:
**DD-A- 3 259**
**DE-A- 3 327 971**
**DE-C- 663 479**
**DE-C- 684 395**
**DE-C- 765 087**
**DE-C- 900 630**
**DE-C- 919 378**
**FR-A- 970 284**
**US-A- 1 444 203**
**US-A- 1 671 255**
**US-A- 3 608 308**
**US-A- 4 114 639**

(73) Patentinhaber: **Ficht GmbH, Spannleitenberg 1,
D-8011 Kirchseeon(DE)**

(72) Erfinder: **Ficht, Reinhold, Spannleitenberg 1,
D-8011 Kirchseeon(DE)**
Erfinder: **Sindeder, Franz, Jaibing 9, D-8250 Dorfen(DE)**
Erfinder: **Baumüller, Andreas, Belgradstrasse 15,
D-8000 München 40(DE)**

(74) Vertreter: **Patentanwälte Dr. Solf & Zapf,
Zeppelinstrasse 53, D-8000 München 80(DE)**

ACTORUM AG

**Beschreibung**

Die Erfindung betrifft eine Brennkraftmaschine nach dem Oberbegriff des Anspruchs 1.

Bei dieser bekannten Brennkraftmaschine ist als Steuerelement für die Gasladungswechselvorgänge ein Kugeldrehschieber vorgesehen.

Es sind jedoch auch Steuerelemente in anderen Ausgestaltungsformen bekannt geworden. Ein solches Steuerelement anderer Bauart ist unter der Bezeichnung Walzendrehschieber nach Cross bekannt, weil sich zwischen den Zapfen ein Walzenkörper befindet, in den die beiden krümmerförmigen Gaskanäle eingebracht sind. Die Lagerung der Walze erfolgt in einem geteilten Zylinderkopf. Dabei wird der Zylinder durch Schraubenfedern gegen die Unterseite der Walze gepreßt, in der in den Gaskanälen eine Umlenkung der Frisch- und Abgase um 90° stattfindet. Das Frischgas tritt in Achsrichtung ein und das Abgas in Achsrichtung aus. Die Reaktionskräfte zwischen Kurbelgehäuse und Kolbenfläche werden durch ein Joch geführt, das außerhalb des Zylinders in dessen Achsverlängerung an der Oberschale des Zylinderkopfes angreift. Es ergibt sich daraus eine Flächenpressung zwischen Walzenoberfläche und Oberschale, wobei zwischen den Oberflächen ein dichtender Ölfilm vorgesehen ist.

Ein anderer Walzendrehschieber nach Baer ist in einem ungeteilten Zylinderkopf ebenfalls gleitlagernd mit einem Ölfilm zwischen der Walzenoberfläche und den Walzenlagern geführt. Die Gaskanäle in der Walze sind in Durchmesserrichtung angeordnet. In axialer Richtung wird die Walze zur Kühlung von Luft oder Wasser durchströmt. Ein beweglicher Zylinderboden dichtet gegen den Verbrennungsraum mit Hilfe einer mehrschichtigen Stahlmembran ab und drückt gegen die Walze. Die daraus resultierende Flächenpressung gewährleistet zunächst eine geringe Vorspannung und damit eine ausreichende Abdichtung im Ansaughub. Die Verbrennungsdrücke rufen dann die erforderliche Steigerung des Anpreßdruckes hervor.

Es sind eine Reihe von weiteren Drehschiebern bekannt, die konstruiert wurden, um die gebräuchlichen hin- und hergehenden Tellerventile zu ersetzen. Tellerventile garantieren zwar ein Höchstmaß an technischer Zuverlässigkeit, weisen eine einfache äußere Form auf, erbringen eine meist problemlose Abdichtung des Verbrennungsraums beim Verbrennungsdruck und lassen sich konstruktiv relativ gut in der Optimierung der Brennkraftmaschine unterbringen, die Gaswechselsteuerung mit Tellerventilen verhindert aber eine Optimierung strömungstechnischer Vorgänge, insbesondere das Öffnungsverhalten (Kanalquerschnitt), und eine Optimierung des Brennraums, weshalb viele Versuche unternommen wurden, Drehschieber zu entwickeln, die die hin- und hergehenden Tellerventile ersetzen könnten, weil die Drehschieber konstruktiv einfacher sind und ein besseres Öffnungsverhalten gewährleisten.

Man unterscheidet bei den bekannten Schiebersteuerungen ungleichförmig bewegte und gleichförmig bewegte Schieber. Die ungleichförmig bewegten Schieber erbrachten zu hohe mechanische und wärmetechnische Belastungen und waren deshalb nicht brauchbar.

Gleichförmig bewegte Drehschieber werden von der Kurbelwelle angetrieben und weisen ein proportionales Drehverhalten auf. Sie sind daher keinen dynamischen Kräften ausgesetzt. Es sind Konstruktionen erarbeitet worden mit unterschiedlichen rotationssymmetrischen Formen des Steuerkörpers.

Eine sogenannte Kugeldrehschiebersteuerung ist für einen Sternmotor entwickelt worden (Bauart Sklenar). Gegenüber einem feststehenden Steuerring, der zum Tragkörper der Maschine gehört, führt der Zylinderstern eine Bewegung aus, die zur Steuerung der im Steuerring angeordneten Ein- und Auslaßkanäle und zum Transport des Zylinderkopfes über die Kompressions-, Zünd- und Arbeitsstrecke benutzt wird. Der relativ schmale Steuerring ist auf seiner Innenfläche sphärisch ausgeführt. Die Zylinder tragen Buchsen, die zur Abdichtung gegen diese Ringfläche unter dem Einfluß der Fliehkraft und der Verbrennungsdrücke anliegen. Die Stirnflächen der Abdichtungsbuchsen entsprechen zylindrischen Kugelausschnitten. Wegen dieser Kugelelemente ist dieser Schieber Kugeldrehschieber genannt worden. Durch die besondere Gestalt der Dichtflächen wird erreicht, daß die Buchse neben der Axial-Verschiebung eine freie Drehung um die Zylinderachse ausführen kann. Hierdurch schleifen sich die Zylinderbuchsen auf der Ringschieberfläche bis zur Bildung eines idealen Abdichtungsspiegels selbsttätig ein. Wenn Fremdkörper auf die Dichtfläche gelangen, werden sie durch die Buchsendrehung forttransportiert. Das Innere der Abdichtungsbuchsen stellt mit dem für die Ladungsverwirbelung günstigen Raum zwischen Kolben und Zylinderboden den Verdichtungs- und Verbrennungsraum dar. Das Verhältnis von Inhalt zu Oberfläche ist günstig und nähert sich dem idealen Verbrennungsraum. Da die Leichtmetall-Abdichtungsbuchsen, die gegen den Zylinderhals mit Kolbenringen dichten, wechselnd von Frisch- und Abgas durchströmt werden, nehmen sie eine verhältnismäßig niedrige Temperatur an und behalten ihre Festigkeit. Die Abdichtung an der sphärischen Fläche ist auch dann noch gut, wenn der feststehende Steuerring durch große Temperaturunterschiede und durch die auf ihn einwirkenden Kräfte nicht mehr der idealen Kugelform entspricht. Der Ausgleich erfolgt dann durch entsprechende Axialverschiebung der Buchsen und Schuhe. Das Einschleifen der Dichtfläche ist ein selbsttätiger Vorgang, der sich fortsetzt, wenn Störungen z.B. durch Fremdkörper auftreten.

Ein wesentlicher Nachteil dieser Bauart ist, daß sie sich nur bei Brennkraftmaschinen in Sternform anwenden läßt.

Eine Anregung von Apfelbeck beinhaltet, einen wälzgelagerten Walzenschieber mit kugeliger Laufbahn auszustatten und über dem Zylinderkopf anzuordnen. Um eine Drehung von Dichtkörpern zu erzielen, sollten dieselben etwas außermittig angesetzt werden. Der Schieber könnte mit Wasser durchspült werden. Mit diesem Vorschlag sollte die bei der Flachschieber-Bauart (Scheibe) nachteilige Reibung des Schiebers auf dem Abschlußdeckel und der dadurch sich ergebende hohe Ölverbrauch vermieden werden. Eine Realisierung dieser Anregung ist nicht erfolgt. Der Vorschlag von Apfelbeck gleicht der Ausführungsform des Walzenschiebers nach Baer mit radial durch die Walze gehenden Gaskanälen und axialer Durchströmbarkeit der Walze mit einem Kühlmittel. Die Walze soll zudem ein erhabenes Kugelsegment aufweisen, dessen Kugelringfläche die Laufbahn der Walze bildet und gegen die Dichtringe wirken sollen, die durch die außermittige Lagerung zur Drehung gezwungen werden sollen.

Obwohl eine Vielzahl von Schieberlösungen für den Gaswechsel vorliegen und die Schieber viele Vorteile gegenüber Tellerventilen gewährleisten könnten, hat bisher kein Schieber das Tellerventil ernsthaft verdrängen können. Die Anwendung des einen oder anderen Schiebers ist technisch möglich, erfordert aber so erhebliche Änderungen der Konstruktion der Brennkraftmaschine, daß die Anwendung nicht in Frage kommen kann. Es ist wirtschaftlich nicht vertretbar, die übrigen Bauelemente der Brennkraftmaschine, die optimal konstruiert und aufeinander abgestimmt sind, und insbesondere mit der Konstruktion der Tellerventilsteuerung harmonisieren, zu ändern und auf eine Schiebersteuerung abzustellen. Da sämtliche Baugruppen wie Kurbelbetrieb, Gehäuse und Gaswechselsteuerung aufeinander abgestimmt sind, sind bisher alle Versuche, die Gaswechselsteuerung grundlegend in ihrer Funktionsweise zu verändern, fehlgeschlagen. Eine solche Neuerung einer Baugruppe einer Brennkraftmaschine erfordert bisher, das gesamte Konzept der Brennkraftmaschine zu ändern.

Alle Schieberkonstruktionen beeinflussen ebenso wie die Tellerventilkonstruktionen die Raumform des Brennraums des Zylinders. Der Brennraum sollte wenig zerklüftet sein, und außerdem sollte seine Oberfläche so klein wie möglich gehalten werden, was mit einer Tellerventilkonstruktion nicht optimal gelöst werden kann. Auch ist die Lage der Zündkerze wesentlich. Sie soll bei den Tellerventilen, wie auch bei den bekannten Drehschiebern, innerhalb eines Radius von etwa 20 mm um die Bohrungsachse des Zylinders liegen.

Bei einer Schiebersteuerung fällt der Abdichtung eine wichtige Rolle zu. Angestrebt werden Dichtelemente, die mit niedriger Fertigungstoleranz und geringem Teileaufwand gefertigt werden können und sich im Betrieb durch Eigenbewegung mit dem Schieber möglichst genau einläppen. Die bekannten Drehschieberkonstruktionen erfordern komplizierte Abdichtungen. Dies stellt einen weiteren Grund dar, warum die Schiebersteuerungen bisher keine Einführung gefunden haben.

Aus der obigen Analyse des Standes der Technik ergibt sich, daß eine Schiebersteuerung technisch machbar ist. Das Wissen über die Abdichtung und Konstruktion ist vorhanden, so daß keinerlei Einschränkungen bei dem Bau einer Brennkraftmaschine gemacht werden müßten. In bezug auf die Qualität des Ladungswechsels bietet eine Kugeldrehschieber-Steuerung gleich welcher Art eindeutige Vorteile gegenüber der Ventilsteuerung. Angesichts der im modernen Kraftfahrzeug-Brennkraftmaschinenbau geforderten Kanalquerschnitte nehmen die bekannten Drehschieber Formen und Größen an, welche nicht mehr erlauben, vorhandene Motorenkonzepte zum Entwurf einer derartigen Steuerung zu verwenden. Bei Reihenmotoren bestimmt die Größe des Drehschiebers den Zylinderabstand und somit die Baugröße der Brennkraftmaschine. Die derzeitigen Steuerschieberkonzepte machen es notwendig, den Abstand zwischen den Zylindern um mindestens 30% zu vergrößern, weshalb die bekannten Drehschieberkonstruktionen beim heutigen Stand der Technik und bei der Forderung nach möglichst kompakten Brennkraftmaschinen im Nachteil sind.

In der GB-A 672 954 ist eine Brennkraftmaschine der eingangs angegebenen Art beschrieben und dargestellt. Bei dieser bekannten Brennkraftmaschine ist der Kugeldrehschieber einstückig aus Vollmaterial hergestellt. Hierdurch sind nicht nur ein großer Materialverbrauch und ein großes Gewicht vorgegeben, sondern es ist auch die Kühlung dieses Kugeldrehschiebers problematisch, und zwar insbesondere ausgangsseitig, weil an dieser Seite das Einlaßgas keine Kühlwirkung auf den Kugeldrehschieber ausüben kann.

Aus der DE-C 765 087 ist eine Brennkraftmaschine mit einem Kugeldrehschieber zu entnehmen, dessen hohler Steuerkörper einstückig mit zu beiden Seiten angeordneten Lagerzapfen hergestellt ist. Auf der Eingangsseite ist zentral ein axialer Zuführungskanal für Kühlflüssigkeit mit einer radialen Ausströmöffnung vorgesehen, durch die Kühlflüssigkeit aufgrund der Fliehkraft automatisch in den Hohlraum des Steuerkörpers gefördert wird und von hier durch einen den Zuführungskanal koaxial umgebenden Ringkanal wieder ausströmt.

In der DE-A 3 327 971 ist eine Brennkraftmaschine mit einem Kugeldrehschieber beschrieben, dessen mit Hohlräumen versehener Steuerkörper einstückig mit zu beiden Seiten angeordneten lagerzapfenförmigen Kupplungsansätzen ausgebildet ist, wobei in den Steuerkörper eine Zündkerze integriert ist.

Aufgabe der Erfindung ist, einen Kugeldrehschieber zur Verfügung zu stellen, der einfach herstellbar ist, ein sehr einfaches Dichtelement erfordert, eine optimale Brennraumgestaltung ermöglicht und insbesondere für Reihenmotoren üblicher Bauart durch Ersatz der Tellerventilkonstruktionen verwendbar ist.

Diese Aufgabe wird bei einer Brennkraftmaschine der eingangs beschriebenen Art durch die kennzeichnenden Merkmale des Anspruchs 1 gelöst.

Bei der erfindungsgemäßen Brennkraftmaschine ist ein funktionssicheres Kugeldrehschiebersystem geschaffen, das ein einfache und betriebssichere Abdichtung des Brennraums ermöglicht und die Möglichkeit der direkten Kühlung des Kugeldrehschiebers für das Gaswechselsystem eröffnet. Ein in den Kühlkanal zwischen dem ersten Lagerzapfen und dem ersten Steuerkanal eintretendes Kühlmedium kann das Innere des Kugeldrehschiebers durchströmen, wonach es z.B. über den Kühlkanal zwischen dem gegenüberliegenden zweiten Lagerzapfen und dem zweiten Steuerkanal austreten kann. Zweckmäßig ist, den Kühlkanal lediglich im Kugelkörper und im gasaustrittsseitigen Lagerzapfen vorzusehen. In die sehr genau herstellbaren Hohlkugelflächen lassen sich – falls erforderlich – auf einfache Weise betriebssicher arbeitende Dichtleisten einsetzen, so daß eine bei fremdgezündeten Brennkraftmaschinen über das übliche Maß hinausgehende Verdichtung im Brennraum erzielbar ist, wobei die kugelige Gewölbeform des Kugeldrehschiebers zur Aufnahme hoher Druckkräfte besonders gut geeignet ist. Da der Kugeldrehschieber über einen an einem Lagerzapfen angebrachten Zahnkranz angetrieben wird, ist die Übertragung der Drehbewegung von der Kurbelwelle auf den Kugeldrehschieber besonders einfach, zumal weder Federkräfte zu überwinden noch ungleichmäßige Beschleunigungen zu erzeugen sind, wie dies bei nockengesteuerten Tellerventilen der Fall ist. Die Anwendung einer Vollkugelform für den Kugeldrehschieber in Verbindung mit der Verbindung des Zylinderkopfdeckels über die Drehlager des Kugeldrehschiebers tragende Flanschteile mit dem Zylinderblock ermöglicht auf fertigungstechnisch einfache Weise eine relativ freie Gestaltung und damit Optimierung des Brennraums im Sinne einer sauberen Verbrennung des jeweils im Brennraum befindlichen Gases. Der in Folge der verwendeten Kugelform des Kugeldrehschiebers eine korrespondierende Kalottenform an der Stirnfläche aufweisende Kolben ist durch geeignete Verstärkungsrippen an der Innenmantelfläche des Kolbenhemdes der besonderen Wärmebeanspruchung derart angepaßt, daß trotz der auftretenden Wärmedehnungen Verkantungen des Kolbens im Zylinder vermieden werden. Dies ist besonders vorteilhaft dann, wenn die erfindungsgemäße Ausbildung auf eine Brennkraftmaschine angewendet wird, die zwei einander gegenüberliegende Zylinderblöcke ähnlich einer Boxeranordnung aufweist und die in den Zylinder gleitenden Kolben über eine Kurbelschleife starr miteinander verbunden sind. Schließlich führt die erfindungsgemäße Ausbildung des Kugeldrehschiebers, insbesondere die Ausbildung der Querschnittsform seiner Steuerkanäle, zu einem sehr günstigen Verhältnis von Öffnungsquerschnitt/Zeitquerschnitt im Vergleich zu Brennkraftmaschinen mit Tellerventil gesteuerten Gaswechsel. Ein weiterer besonderer Vorteil ergibt sich daraus, daß bei Verwendung einer Hohlkugel die Zündkerze insbesondere zentriert innerhalb der Hohlkugel untergebracht werden kann.

Die Erfindung wird nachfolgend anhand der in der Zeichnung abgebildeten Ausführungsbeispiele beschrieben. Es zeigen:

Fig. 1 einen Schnitt durch den Zylinderkopf einer Brennkraftmaschine mit einem der Gaswechselsteuerung dienenden Kugeldrehschieber gemäß der Erfindung in der Einlaßstellung,

Fig. 2 den Schnitt II–II in Fig. 1, wobei der Kugeldrehschieber in der Zündstellung dargestellt ist,

Fig. 2a einen der Fig. 2 entsprechenden Schnitt, wobei jedoch der Kugeldrehschieber in der Gaswechselstellung – Überschneidung des Gasein- und Gasauslaßkanals in Kolbenstellung OT – dargestellt ist,

Fig. 2b einen der Fig. 2 entsprechenden Schnitt mit einer modifizierten Ausbildung des Kolbens,

Fig. 2c bis 2e verschiedene modifizierte Ausbildungen des Kolbens,

Fig. 3 eine Draufsicht auf den Zylinderkopf der Brennkraftmaschine nach Fig. 1,

Fig. 4 eine perspektivische Teilschnitt-Darstellung des Kugeldrehschiebers und seiner Steuerkanten in vergrößerter Darstellung,

Fig. 5 ein Diagramm betreffend der Öffnungsquerschnitte in Abhängigkeit vom Kurbelwinkel einer Brennkraftmaschine mit dem erfindungsgemäßen Kugeldrehschieber im Vergleich mit Brennkraftmaschinen mit einer 2-Ventilsteuerung bzw. mit einer 4-Ventilsteuerung,

Fig. 6 eine Tabelle, aus der die Öffnungsquerschnitte und Zeitquerschnitte mit den entsprechenden Vergleichszahlen für Viertakt-Motoren mit verschiedenen Gaswechselsystemen für den Einlaß ersichtlich sind,

Fig. 7 einen Schnitt durch eine weitere Ausführungsform des Kugeldrehschiebers, und

Fig. 8 eine räumliche Darstellung des Kugeldrehschiebers gemäß Fig. 7 teilweise im Schnitt.

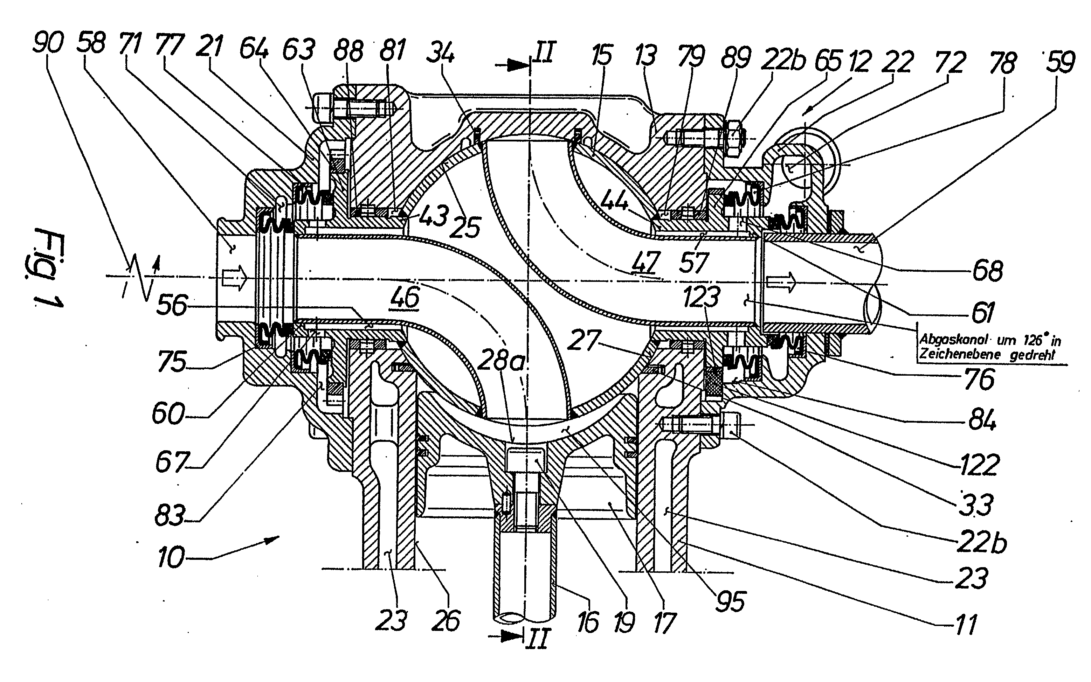

Eine insgesamt mit der Bezugsziffer 10 bezeichnete, in Fig. 1 nur teilweise dargestellte Brennkraftmaschine umfaßt einen Zylinderblock 11, einen Teil eines Zylinderkopfes 12 bildenden Zylinderdeckel 13, einen zwischen diesen drehbar gelagerten Kugeldrehschieber 15 sowie einen auf einer Kolbenstange 16 befestigten Kolben 17.

Das den Zylinderblock 11 lagernde Kurbelgehäuse ist der bessern Übersicht halber nicht dargestellt und damit auch nicht der zugehörige gleichachsig gegenüberliegende weitere Zylinderblock mit Zylinderkopf sowie der zugehörige Kolben und die Kolbenstange. Beide Zylinderblöcke sind also nach Art eines Boxermotors angeordnet, ihre Kolben sind mit den Enden einer starren Kolbenstange verbunden, die über eine ebenfalls nicht dargestellte Kurbelschleife die hin- und hergehende Bewegung der Kolben in eine Drehbewegung umwandeln.

In Fig. 1 ist, wie bereits erwähnt, lediglich der Kolben 17 dargestellt, der über eine stirnseitige Schraube 19 mit dem einen Ende der Kolbenstange 16 verbunden ist.

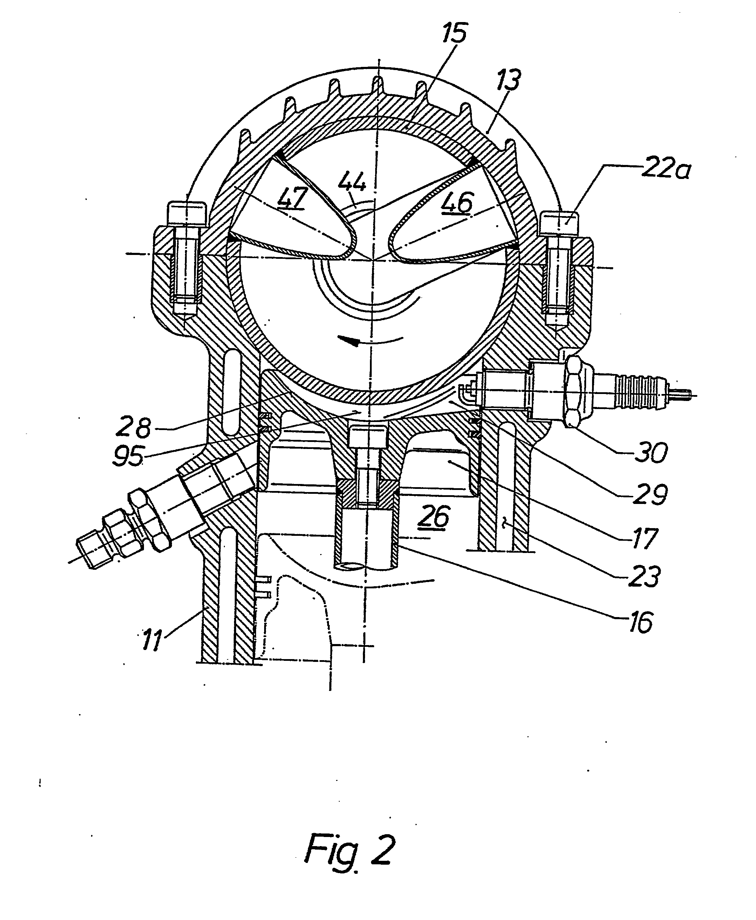

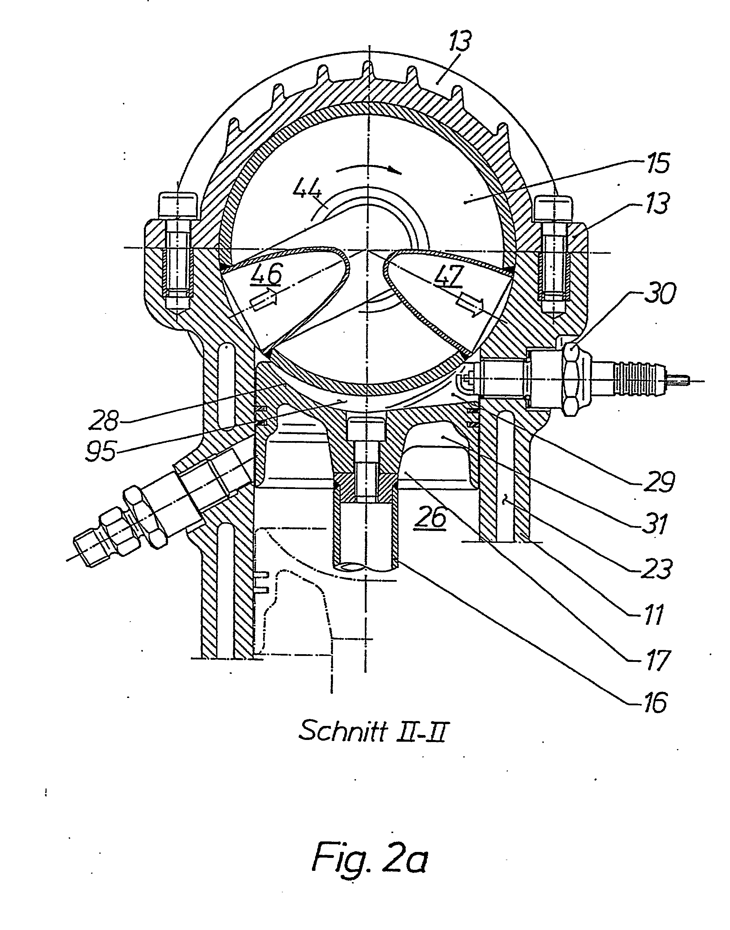

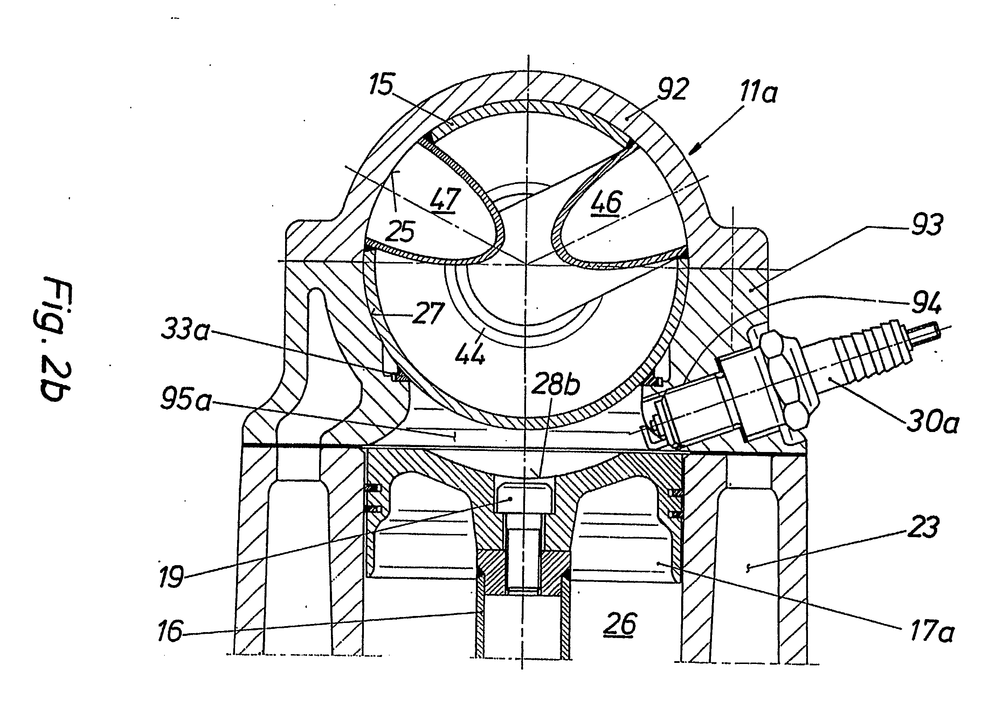

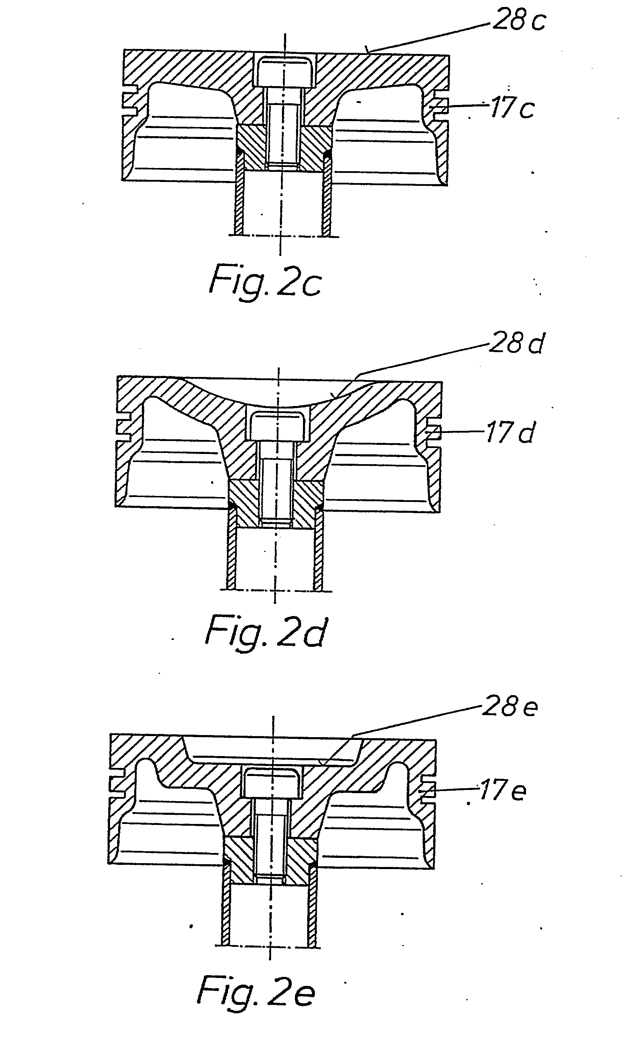

Der Zylinderdeckel 13 ist, wie die Fig. 1 und 2 zeigen, mit dem Zylinderblock 11 direkt über Spannschrauben 22a lösbar verbunden. Der Zylinderdeckel 13 weist an seiner Innenseite mit Ausnahme der Einmündungsbereiche der Lagerzapfen 43, 45 des Kugeldrehschiebers 15 eine kalottenförmige bzw. kugelgewölbeförmige Gegenfläche 25 auf, während der Zylinderblock 11 im Bereich des oberen Endes der Zylinderbohrung 26 am Innenrand mit Ausnahme der Einmündungsbereiche der Lagerzapfen 43, 44 und der Zylinderbohrung 26 ebenfalls eine kugelgewölbeförmige Gegenfläche 27 besitzt. Im Zylinderblock 11 sind Kühlkanäle 23 vorgesehen. Flanschkappen 21, 22 werden, nachdem der Zylinderdeckel 13 mit dem Zylinderblock 11 verbunden ist, separat seitlich angeschraubt (Schrauben 22b) und üben keine tragende Funktion hinsichtlich der Kugeldrehschieberlagerung und der Druckkräfte beim Verbrennungsvorgang aus. Sie überdecken jeweils die Lagerstelle für den Kugeldrehschieber, die zwischen dem Zylinderdeckel 13 und dem Zylinderblock 11 angeordnet ist.

Ebenso weist der Kolben 17 eine kugelschalenabschnittförmig ausgebildete Stirnfläche 28 auf, in die eine sich radial erstreckende Nut 29 eingebracht ist, in die die Elektroden einer im Zylinderblock radial eingeschraubten Zündkerze 30 ragen, vgl. Fig. 2. Der Nut 29 ist eine innerhalb des Kolbenhemdes liegende Kühlrippe 31 (Fig. 2a) zugeordnet. Sowohl der Kugelfläche bzw. Kalottenfläche im Zylinderdeckel 13 als auch der Kugelfläche bzw. Kalottenfläche im Zylinderblock 11 sind Dichtleisten 33 und 34 zugeordnet, von denen die Dichtleiste 33 ringförmig ausgebildet ist.

Der Kolben 17 kann aber auch, wie die Fig. 2b bis 2e zeigen, eine rotationssymmetrische Ausbildung seiner Stirnfläche aufweisen, nämlich als ebene Fläche 28c, als kalottenförmige Fläche 28d mit ringförmigem Rand und als kegelstumpfförmige Fläche 28e mit ringförmigem Rand. Die Zündkerze 30a ist dann gemäß der Anordnung nach Fig. 2b oberhalb des oberen Kolbentotpunktes angeordnet.

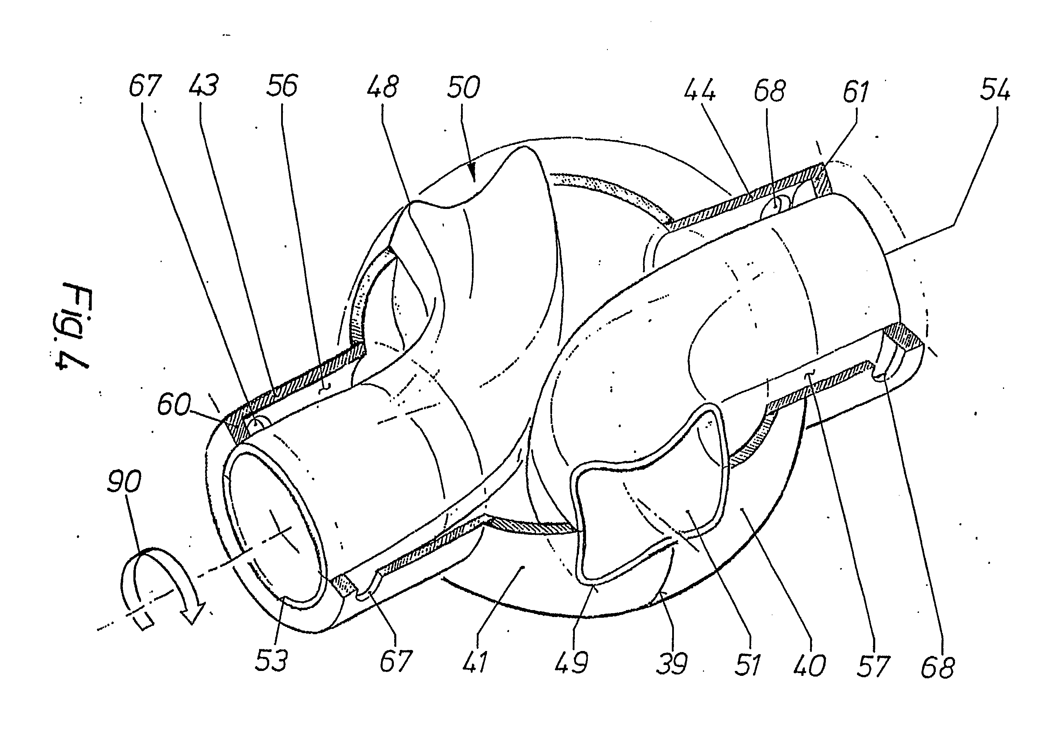

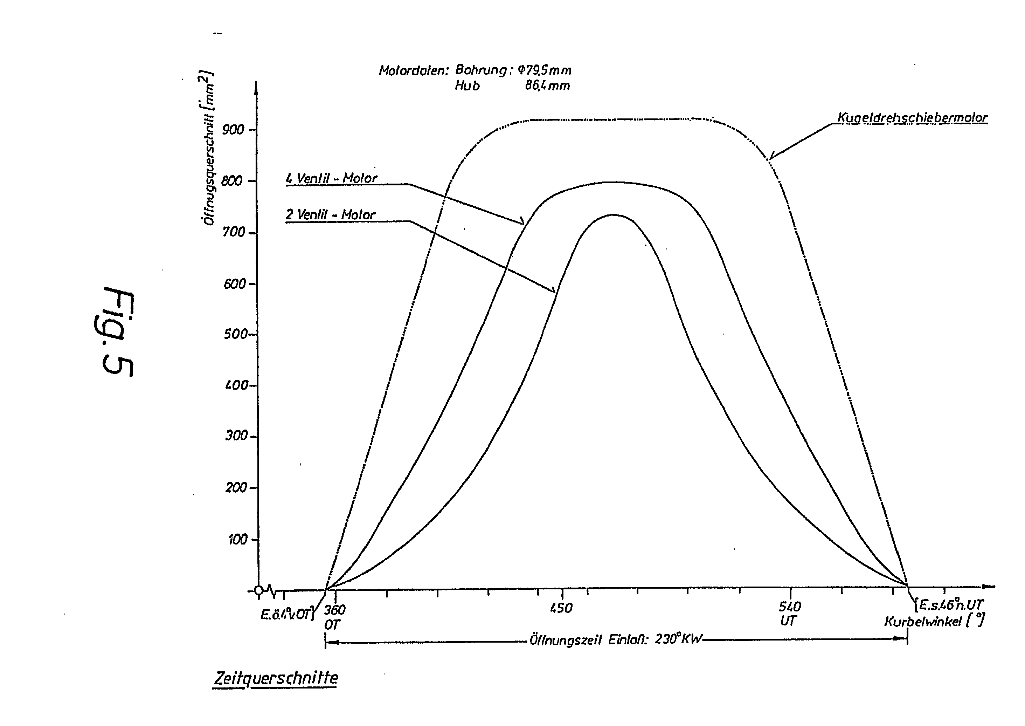

Anhand der Fig. 4 wird die Raumform einer Ausführungsform des Kugeldrehschiebers 15 im folgenden beschrieben. Er besteht aus zwei miteinander gasdicht verschweißten, kugelhalbschalenförmigen Teilen 40, 41, an die je ein rohrförmiger Lagerzapfen 43, 44 an einander gegenüberliegenden Seiten zentrisch angeschweißt ist. Die sich zu einer Hohlkugel in der äquatorial angeordneten Trennaht 39 ergänzenden Teile 40, 41 werden von zwei krümmerförmigen Steuerkanälen 46, 47 in der in den Fig. 1, 2, 2a, 2b und 4 dargestellten Weise unter einem Steuerwinkel von z.B. 126° – dieser Steuerwinkel ist auf den jeweiligen Motortyp abzustimmen, da davon die Steuerzeiten und die Überschneidungswinkel abhängen – durchsetzt, so daß die einen Enden 48, 49 formschlüssig in Öffnungen 50, 51 der Teile 40, 41 münden, während die anderen Enden 53, 54 die rohrförmigen Lagerzapfen 43, 44 koaxial derart durchsetzen, daß jeweils von der Außenmantelfläche des Steuerkanals und der Innenmantelfläche des Lagerzapfens begrenzte Kühlkanäle 56, 57 entstehen, vgl. auch Fig. 1. Wie insbesondere die Fig. 1 und 4 zeigen, sind die Querschnitte der in den Öffnungen 50, 51, also in den Brennraum bzw. in die Zylinderbohrung 26 – mündenden Bereiche der Steuerkanäle 46, 47 etwa rechteckförmig und der Querschnitt der in den rohrförmigen Lagerzapfen 43, 44, also in die An- und Absaugleitung 58, 59 mündenden Bereiche der Steuerkanäle kreisförmig ausgebildet, um ein günstiges Verhältnis Öffnungsquerschnitt/Zeitquerschnitt für die Gaswechselsteuerung zu erhalten, wie dies im einzelnen das Diagramm gemäß Fig. 5 in noch zu beschreibender Weise zeigt.

Der Lagerzapfen 43 weist an seinem der Kugel abgewandten freien Ende einen sich radial erstreckenden Ring 60 und der Lagerzapfen 44 an dem entsprechenden Ende einen sich radial erstreckenden Ring 61 auf, mit denen jeweils die zugeordneten Enden der Steuerkanäle 46, 47 gasdicht verschweißt sind. Die Enden 48, 49 sind ebenfalls in den Öffnungen 51, 52 der Teile 40, 41 gasdicht verschweißt.

Der Lagerzapfen 43 weist ferner einen an seiner Außenmantelfläche flanschringartig sich radial nach außen erstreckenden ringförmigen Vorsprung 63 mit einem darauf befestigten Zahnkranz 64 mit radial sich erstreckenden Zähnen auf (Fig. 1), der außerhalb der Lageröffnung 81 angeordnet ist und über den in nicht dargestellter Weise der Kugeldrehschieber 15 von der ebenfalls nicht dargestellten Antriebswelle gleichförmig angetrieben wird. Die Außenmantelfläche des anderen Lagerzapfens 44 weist ebenfalls einen flanschartigen, radial sich erstreckenden, ringförmigen Vorsprung 65 auf. Der Vorsprung 65 ist außerhalb der Lageröffnung 79 angeordnet und liegt mit einem Gleitring oder dgl. an der Stirnfläche des Zylinderdeckels 13 und des Zylinderblocks 11 an, wodurch der Kugeldrehschieber 15 axial festgelegt ist, weil der Antrieb so ausgelegt ist, daß er den Flanschring 65 gegen die Stirnfläche zieht. Beide Lagerzapfen 43, 44 sind von mehreren Bohrungen 67, 68 radial durchsetzt, so daß die Kühlkanäle 56, 57 über diese Bohrungen mit einem Kühlmittel führenden Kanal 71 und einem Kühlmittel abführenden Kanal 72 kommunizieren, vgl. Fig. 1.

Den Stirnseiten der Lagerzapfen 43, 44 sind jeweils an sich bekannte Gleitringdichtungen 75, 76 in an sich bekannter Weise zugeordnet. Ebenso sind dem Zahnkranzflansch 63 und dem Flansch 65 Gleitringdichtungen 77, 78 zugeordnet. Diese Dichtungen lagern in entsprechenden Ausnehmungen in den Flanschkappen 21, 22.

Wie aus Fig. 1 ferner zu ersehen ist, ist der Kugeldrehschieber 15 mittels seiner Lagerzapfen 43, 44 in zylindrischen Lageröffnungen 79, 81 gelagert, die sich jeweils hälftig im Zylinderblock 11 und hälftig im Zylinderdeckel 13 befinden, um die Montage des Kugeldrehschiebers 15 zu ermöglichen. Wie schon erwähnt, wird der Zylinderdeckel 13 am Zylinderblock 11 gehalten; die mit beiden verbundenen Flanschkappen 21, 22 sind mit für die Aufnahme der Dicht-, Lager- und Antriebsteile dienenden rotationssymmetrischen bzw. ringstufenförmigen Ausnehmungen, z.B. 83, 84 versehen.

Der Kugeldrehschieber 15 ist in den Lageröffnungen 79, 81 von Zylinderblock 11 und Zylinderdeckel 13 unter Zwischenfügung von Lagerschalen 88, 89 drehbar gelagert. Die Gleitringdichtungen 75 bis 78 gewährleisten eine sichere Abdichtung zwischen den gas-, den kühlmittel- und schmiermittelführenden Kanälen.

Im Betrieb wird der Kugeldrehschieber 15 von der nicht dargestellten Antriebswelle über ebenfalls nicht dargestellte Übertragungsglieder, die mit dem Zahnkranz 64 in Eingriff stehen, in Richtung des Pfeiles 90 gleichmäßig derart angetrieben, daß über die Steuerkanäle 46, 47 erst der Gaseinlaß 58 und nach Verdichtung und Zündung des eingespülten Gemisches der Gasauslaß 59 mit dem Brennraum, also mit der Zylinderbohrung 26, kommuniziert. In Fig. 1 ist die Drehstellung des Kugeldrehschiebers 15 erkennbar, in der der Gaseinlaß mit dem Brennraum in Verbindung steht, während die Fig. 2 die Drehstellung des Kugeldrehschiebers zeigt, in der die Zündung und Verbrennung des eingespülten Gemisches erfolgt. Schließlich ist in Fig. 2a die Drehstellung des Kugelschiebers 15 in der Gaswechsel-Stellung gezeigt, in der der Kolben 17 sich in seiner oberen Totpunktlage befindet.

In der in Fig. 2b dargestellten modifizierten Ausführungsform ist der Zylinderdeckel zweiteilig ausgebildet, und zwar ist er in ein kugelkalottenförmiges Deckeloberteil 92 und in ein kugelkalottenförmiges Deckelunterteil 93 unterteilt, die gemeinsam mit dem nur teilweise dargestellten Zylinderblock 11a in nicht dargestellter Weise gasdicht verschraubt sind. Das Deckelunterteil 93 weist eine geneigte, seitliche, entsprechend abgesetzte Gewindebohrung 94 auf, in die die Zündkerze 30a eingeschraubt ist. Die Zündkerze 30a ragt mit ihren Zündelektroden in einen sich oberhalb der Zylinderbohrung 26 befindlichen Brennraum 95a zwischen der Stirnfläche 28b des Kolbens 17 und dem Kugeldrehschieber 15. Bei dieser Ausführungsform ist nur ein Dichtungsring 33a zwischen Kugeldrehschieber und Zylinderkopf in der Ringkalottenfläche des Deckelunterteils 93 vorgesehen. Ferner entfällt die Nut 29 in der Stirnfläche des Kolbens 17; diese Stirnfläche kann vielmehr gemäß den Fig. 2c bis 2e ausgebildet sein, so daß auch die zusätzliche Rippe 31 – vgl. Fig. 2a – entfällt.

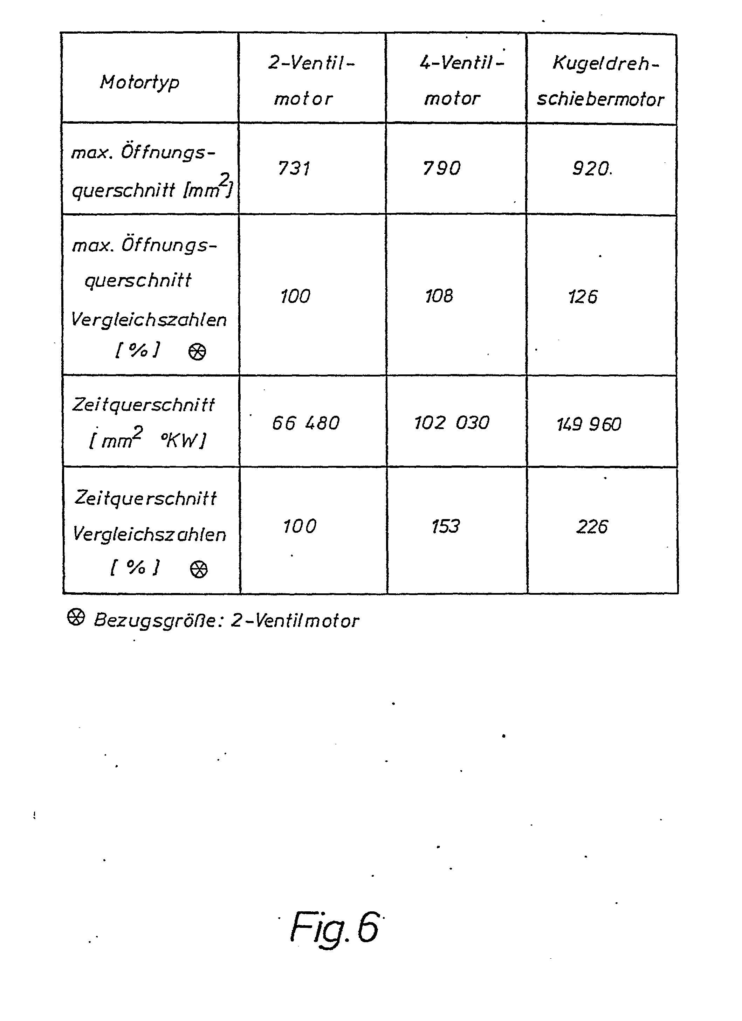

Aus den Fig. 5 und 6 ist ohne weiteres ersichtlich, daß der vorstehend beschriebene Kugeldrehschieber 15 bezüglich der Öffnungs- und Zeitquerschnitte sowohl einem üblichen 2-Ventil- als auch einem üblichen 4-Ventil-Motor überlegen ist; in Prozentzahlen ausgedrückt ist sein Öffnungsverhalten um 108 bis 226% besser als bei einem vergleichbaren 2-Ventil-Motor, bezogen jeweils auf die gleiche Zylinderbohrung 26.

Bekanntlich ist der theoretische maximale Ventilöffnungsquerschnitt der Zylinderbohrungsquerschnitt, hier ein Ø von 79,5 mm, also = 4960 mm². Über die Ventile wird aber nur jeweils ein Teilquerschnitt geöffnet. Die Verhältnisse zwischen Zylinderbohrungsquerschnitt und den einzelnen Ventilquerschnitten der gewählten einzelnen Motortypen sind:

$$\frac{\text{Ventilöffnungsquerschnitt}}{\text{Zylinderbohrungsquerschnitt}}$$

| | | |
|---|---|---|
| 2-Ventil-Motor | $\dfrac{731 \text{ mm}^2}{4960 \text{ mm}^2}$ = | 0,15 |
| 4-Ventil-Motor | $\dfrac{790 \text{ mm}^2}{4960 \text{ mm}^2}$ = | 0,16 |
| Kugeldrehschiebermotor | $\dfrac{920 \text{ mm}^2}{4960 \text{ mm}^2}$ = | 0,19 |

D.h. der Kugeldrehschieber 15 ist mit Hilfe seiner Konstruktion in der Lage, bei einer vorgegebenen Brennkraftmaschine mit bestimmter Zylinderbohrung einen größeren Ventilöffnungsquerschnitt gegenüber anderen Ventilsteuerungssystemen zu erzielen, wie obige Darstellung beweist.

Es ist ohne weiteres verständlich, daß der beschriebene Kugeldrehschieber 15 sowohl in Verbindung mit Viertakt- als auch in Verbindung mit Zweitakt-Brennkraftmaschinen bei entsprechender Abänderung der Gaskanäle einsetzbar ist.

Der Kugeldrehschieber 15 kann ein- oder mehrteilig, wie eingangs beschrieben, ausgebildet sein sowie aus metallischen oder aus keramischen oder gar aus Verbundwerkstoffen bestehen, je nach den Forderungen des jeweiligen Anwendungsgebietes.

Der Kugeldrehschieber 15 kann ferner Teil eines Einzylinder- oder Mehrzylinder-Motors sein, sein Anwendungsgebiet ist also auf die beschriebene Bauart nicht begrenzt. Auch sind andere Ausbildungsformen des Kolbens und des Zylinderdeckels entsprechend den jeweiligen Erfordernissen der zu wählenden Konfiguration des Brennraums möglich, ohne daß hierdurch der Erfindungsgedanke verlassen wird. Besonders beachtlich ist, daß er auch für Reihenmotoren anwendbar ist, ohne daß die anderen Bauteile verändert werden müssen. Dabei ist vorgesehen, daß über jedem Zylinder ein Kugeldrehschieber 15 angeordnet ist, dessen Rotationsachse sich quer zur Aufreihrichtung der Zylinder erstreckt. Es ist eine Bauhöhe zu erzielen, die niedriger als bei Tellerventilen ist. Darüber hinaus ist eine Raumform des Brennraums ausbildbar, die sich dem Optimum nähert. Die Dichtung ist in der Kalottenfläche 27 angeordnet und braucht deshalb nur aus einem einfachen Ring 33, 33a, 33b zu bestehen. Es ergibt sich also ein sehr einfaches Dichtelement. Es sind weder komplizierte Dichtringformen noch Dichthülsen erforderlich. Ein besonderer Schritt ist, die Lagerung des Kugelkörpers auf die Lagerzapfen 43 44 zu verlegen und nicht auf die Kugeloberfläche, wie das z.B. bei den bekannten Walzenschiebern mit der Walzenoberfläche der Fall war. Es kann sogar ein Spalt zwischen Kugeloberfläche und Kalottenfläche 25, 27 vorgesehen sein, der nicht mit einem Ölfilm ausgefüllt werden muß.

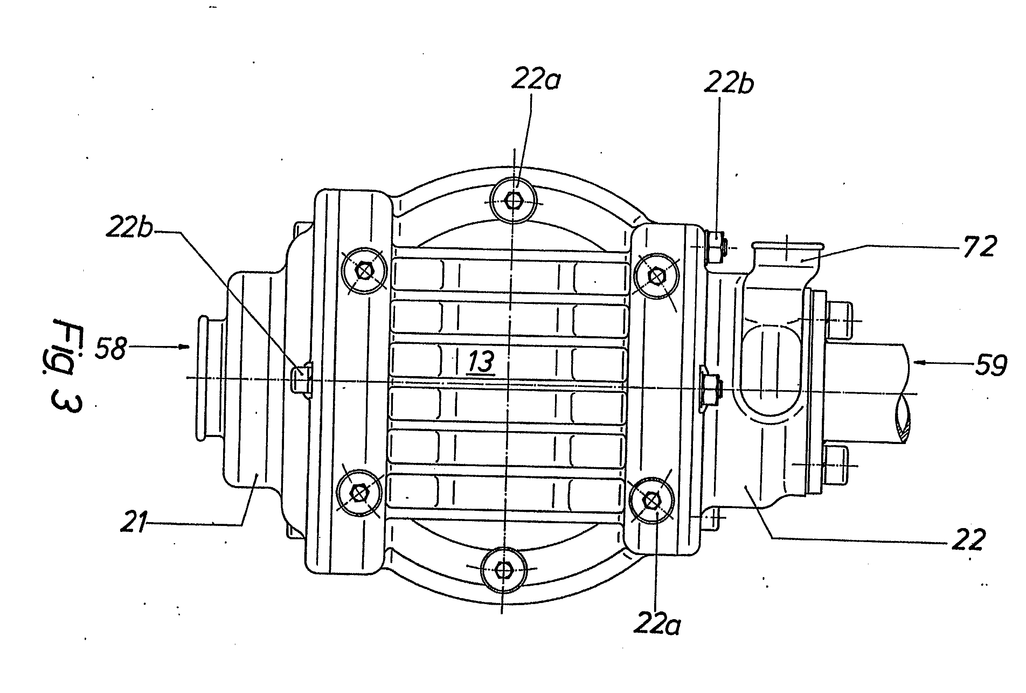

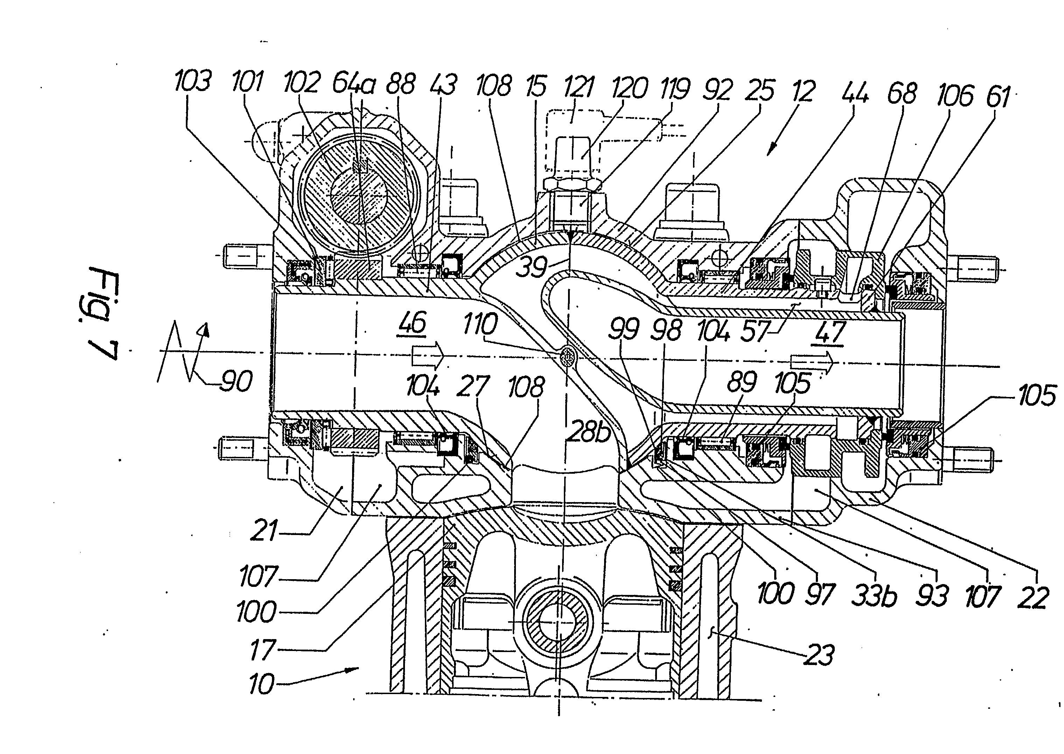

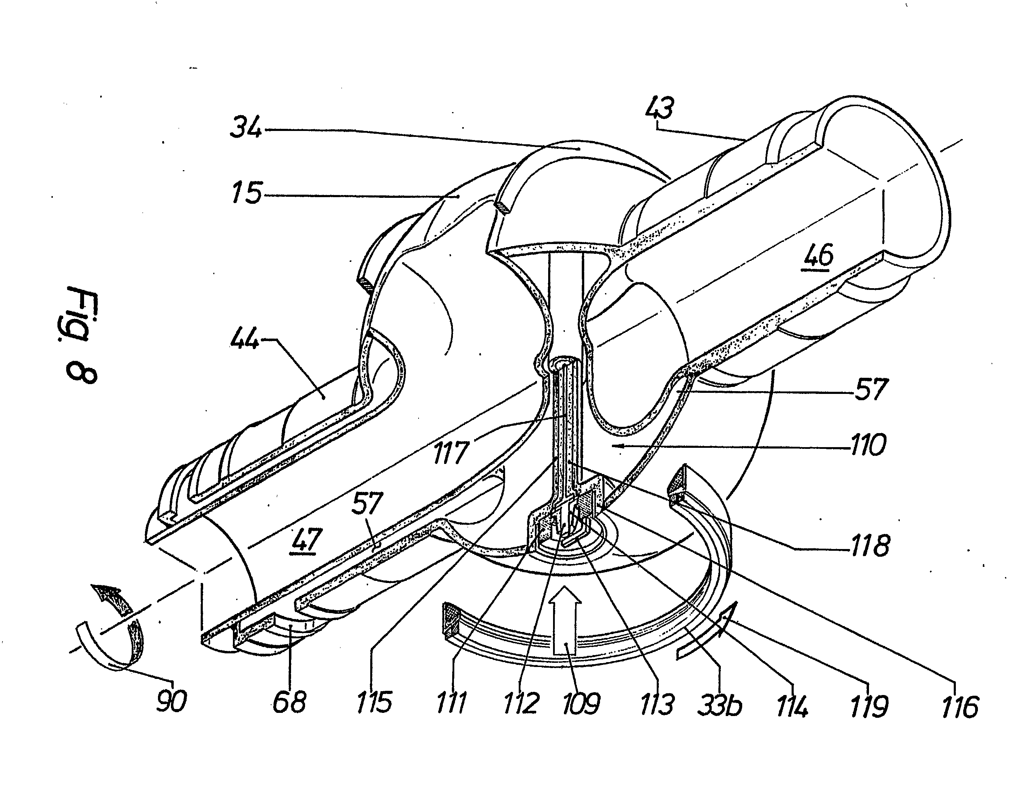

Eine weitergehende Ausführungsform des erfindungsgemäßen Kugeldrehschiebers 15 zeigen die Fig. 7 und 8. Soweit baugleiche Raumformen mit der Ausführungsform nach den Fig. 1 bis 6 vorliegen, sind die Bauteile mit den gleichen Bezugsziffern belegt.

Die Ausführungsform nach den Fig. 7 und 8 weist wie die nach Fig. 2b einen zweigeteilten Zylinderdeckel 13 auf. Der Dichtring 33b sitzt in einer Ringnut 97, die in die Kalottenfläche 27 des Zylinderdeckelunterteils 93 eingebracht ist. Der Dichtring besteht aus einem Kohle- bzw. Graphitring 98 und liegt an der Kugeloberfläche an. Er lagert fest in einem Metallring 99, der gegen den Boden der Ringnut 97 mit einem Federelement 100 abgestützt ist. Der Kugeldrehschieber 15 ist z.B. aus einem geeigneten Keramikmaterial hergestellt und weist lediglich einseitig, nämlich gasauslaßseitig, einen Kühlkanal 57 auf, der den Gaskanal 47 umgibt und den verbleibenden Hohlraum der Kugel durchsetzt. Der Kühlkanal 57 wird somit durch den den Gaskanal 47 umgebenden Zylinderringraum im Lagerzapfen 44 und den verbleibenden Kugelhohlraum gebildet. Es wird mit dieser Kühlkanalanordnung eine optimale Kühlung des Kugeldrehschiebers 15 erreicht. Auf der Gaseinlaßseite bilden der Lagerzapfen 43 und der Gaskanal 46 eine Einheit, d.h. es ist kein gesonderter Zylinderkanal für das Kühlmittel vorgesehen.

Die Axiallagerung des Kugeldrehschiebers 15 wird bei dieser Ausführungsform der Erfindung durch ein Axiallager 101 gewährleistet, das an einer Seite am Zahnrad 64a anliegt und an der anderen Seite gegen eine Ringkante 103 in der Flanschkappe 21 drückt. Der Antrieb des Kugeldrehschiebers 15 wird über ein Schraubenrad 102 übertragen, dessen Steigung den Kugeldrehschieber 15 gegen die Kappenkante 103 drückt.

Radialwellendichtungen 104 und Gleitringdichtungen 105 dichten die Lagerzapfenoberflächen des Kugeldrehschiebers 15 gegen die Lagerflächen ab. Zudem ist ein Pumprad 106 innerhalb der Flanschkappe 22 auf dem Lagerzapfen 44 angeordnet, das das Kühlmittel durch den Kühlkanal 57 treibt. Darüber hinaus sind weitere Kühlkanäle 107 im Zylinderkopfdeckelteil untergebracht, so daß nicht nur der Kugeldrehschieber, sondern auch der gesamte Zylinderkopf optimal gekühlt werden können.

Man erkennt in Fig. 7 einen Spaltraum 108 zwischen der Kugeloberfläche und den Kalottenflächen 25, 27, der beim erfindungsgemäßen Kugeldrehschieber 15 vorhanden sein kann und nicht mit Öl ausgefüllt zu werden braucht. Durch diesen freien Spaltraum 108 wird ein besonders reibungsarmer Lauf des Kugeldrehschiebers 15 gewährleistet. Das Vorsehen eines solchen Spaltraums 108 ist beim erfindungsgemäßen Kugeldrehschieber 15 erstmals möglich, weil die Abstützung des Kugeldrehschiebers auf die Lagerzapfen 46, 47 verlegt wurde und die Steuerkörperoberfläche bzw. Kugeloberfläche nicht mehr zur Abstützung des Kugeldrehschiebers 15 benötigt wird. Über den Spaltraum 108 kann im Bereich der Kalottenfläche 27 der Druck aus dem Zylinder in die Nut 97 gelangen und den Dichtring 33b in Pfeilrichtung 109 (Fig. 8) gegen die Kugeloberfläche pressen.

Aus Fig. 8 ist ersichtlich, daß die gesamte Hohlkugel bis auf die Wandungsteile der Kanäle 46, 47 zur Bildung des Kühlkanals 57 beiträgt.

Nach einer besonderen Ausführungsform der Erfindung ist im Bereich einer Ebene, die durch den Mittelpunkt der Kugel geht, ein Abstand zwischen den Außenwandungen der Krümmerteile der Gaskanäle 46, 47 vorgesehen. Diesen Zwischenraum durchgreift eine Zündkerze 110 auf einer Durchmesserlinie. Nach der Erfindung ist die Zündkerze 110 somit im mit gleichförmiger Winkelgeschwindigkeit drehenden Steuerkörper angeordnet.

Die erfindungsgemäße Zündkerzenanordnung weist einen elektrisch leitenden Zündkerzeneinsatzring 111 mit einer Masseelektrode 113 auf, in dessen Innenraum zunächst ein Isolierkörper 114 und darin eine Mittelelektrode 112 angeordnet sind. Dieser Einsatzring 111 ist in einem Metallrohr 115 eingeschraubt, das die Kugel auf der Durchmesserlinie durchsetzt und an den jeweiligen Austritten 116 der Kugel aus Metall luftdicht mit der Kugelschale verschweißt ist. Im Rohr 115 befindet sich axial bzw. mittig eine Zündleitung 117, welche in einer Hülle 118 aus elektrisch isolierendem Werkstoff eingebettet ist. Die Zündleitung 117 endet am dem Einsatz 111 gegenüberliegenden Ende an der Oberfläche des Kugelkörpers in einem Gleitschuh (nicht dargestellt) und steht anderendig mit der Mittelelektrode 112 in Kontakt.

Im Zylinderkopfoberteil 13, 92 ist mit einem Gewinde ein Zündstromübertragungsteil 119 eingeschraubt. Es besteht ebenfalls aus einer zentralen Zündleitung, einem Isolierkörper darum herum und einem Gehäuse 120. Das Gehäuse 120 ist so dimensioniert, daß durch Drehen des Kugeldrehschiebers 15 um 180° in den Überschneidungs-OT der Zündkerzeneinsatz 111 sichtbar wird und ohne Demontage des Zylinderkopfes ausgewechselt werden kann.

An das Zündstromübertragungsteil 119 kann eine handelsübliche Zündanlage 121 angeschlossen werden.

Um einen einwandfreien Stromfluß vom drehbaren Kugeldrehschieber 15 zu den stationären Bauteilen 11, 11a, 13, 92 zu erreichen und dies über die Gleitlagerung 88 und 89 nur unter erhöhtem elektrischen Widerstand (Ölfilm in den Gleitlagern) möglich ist, ist ein Schleifring 123 am Flanschring 65 oder am Flanschring 63 angeordnet (Fig. 1). Eine stationärseitig befestigte Bürste 122 ermöglicht den notwendigen Stromfluß, ähnlich wie bei einem Kollektor in einem Elektromotor.

Die erfindungsgemäße Zündkerzenanordnung ergibt die Möglichkeit der Positionierung der Zündkerze an der günstigsten Stelle des Brennraums 95 z.B. in der Mitte der oberen Begrenzungsfläche des Zündraums in der Zylinderachse. Der Brennraum kann ohne Beeinträchtigung durch Einbauraum der Zündkerzenlagerung gestaltet werden. Der Verbrennungsablauf kann optimiert werden. Die Zündkerzenteile in der Kugel können gekühlt werden. Die Brennraumumgebung ist raumformmäßig einfacher zu gestalten wegen des Fehlens des Zündkerzeneinbaus und kann optimal gekühlt werden.

Die erfindungsgemäße Zündkerzenanordnung kann auch bei anderen Rotationskörpern, z.B. bei einer Walze vorgesehen werden und ist nicht auf die Anordnung in der Kugel beschränkt. Gleichwohl ist sie dort besonders zweckmäßig untergebracht.

Die Verwendung einer Kugel als Steuerkörper erbringt unerwartete Vorteile. Es können einfache Bauteile verwendet werden, so daß die Fertigung kostengünstig wird. Die rotationssymmetrischen Bauteile des Kugeldrehschiebers 15 weisen keine örtlichen Materialanhäufungen auf, so daß durch die Einwirkung von Temperaturwechseln und unterschiedlicher Wärmebeaufschlagung kein Verziehen des Steuerkörpers erfolgen kann. Die Raumform des Kugeldrehschiebers 15 bleibt gleichförmig. Der gegen die Kugeloberfläche drückende Dichtring kann aus unterschiedlichen Werkstoffen, z.B. auch Keramik bestehen, weil der Steuerkörper keine Dimensionsänderungen erfährt. Er kann durch leicht geneigte Lagerung eine Rotation um seinen Mittelpunkt ausführen und dadurch die Dichtwirkung über einen langen Zeitraum gewährleisten.

Beim Kugeldrehschieber 15 kann auf eine zusätzliche Schmierung verzichtet werden, da die Kugeloberfläche nur an der Dichtkante des Dichtrings anliegt. Es ist sogar ein Spalt zwischen Kugeloberfläche und Gegenflächen im Zylinderkopf vorgesehen, der etwa 0,2 bis 0,08 mm betragen kann. Der Steuerkörper und der Dichtring können z.B. aus keramischen Werkstoffen bestehen. Eine aus Metall bestehende Kugel kann aber auch mit keramischen Werkstoffen durch z.B. Plasmaspritzen beschichtet sein. Diese Ausführungsformen sind möglich, weil eine Schmierung nicht erforderlich ist.

Die erfindungsgemäße Kugeldrehschieberanordnung kann optimal gekühlt werden, weil die Raumformen der Bauteile einfach sind. Massenanhäufungen fehlen. Dies begünstigt die Herstellung der Teile aus keramischen Werkstoffen. Die Druckkrafteinleitung beim Verdichtungsvorgang ist bei der Kugel aufgrund der Gewölbeform außerordentlich günstig. Die Herstellung der Kugelform ist gegenüber einer Zylinderform besonders einfach und problemlos.

Die Lagerung des Kugeldrehschiebers 15 auf den Lagerzapfen 43, 44 ist möglich, weil die Lagerzapfen keinen beachtlichen Temperaturwechseln ausgesetzt sind und folglich durch Wärmeeinwirkung keine Raumveränderungen erfahren. Die Lagerschmierung ist aus diesem Grunde auch problemlos.

Insbesondere aber ist hervorzuheben, daß bei Einbau der Zündkerze in den Hohlraum der Kubel eine Brennraumgestaltung gewährleistet werden kann, die optimaler nicht sein kann. Daraus resultiert, daß sehr hohe Leistungen der Brennkraftmaschine erzielbar sind. Die Zündung kann in der Zylinderachse erfolgen, wodurch die Flammfront sich kreisförmig einstellt. Sie findet aufgrund des kreisrunden Seitenwandringes im Zylinder an allen Punkten zum selben Zeitpunkt ihren Abschluß.

Der Brennraum kann sehr klein gehalten werden, insbesondere wenn die Oberfläche des Kolbens kalottenförmig ausgebildet ist und der Radius der Kalottenform dem Radius der Kugel angepaßt ist.

Ein weiterer Vorteil ergibt sich aus den kühlen Brennraumwänden, da sowohl der Seitenwandring als auch die Drehschieberkugel mit geeignetem Kühlmittel intensiv gekühlt werden können. Außerdem fehlen im Gegensatz zum Ventilmotor die heißen Abgasventile. Aufgrund dieses Fehlens von Heißstellen im Brennraum ist ein wesentlich höheres Verdichtungsverhältnis und damit eine höhere Motorleistung erzielbar.

Beim erfindungsgemäßen Kugeldrehschieber 15 wird erstmals eine Zündkerze innerhalb des Steuerkörpers angeordnet. Sie kann daher zentral über der Brennraummitte angeordnet werden. Indem die Zündkerze eine intensive Kühlung erfährt, stellt sie keine Heißstelle mehr im Brennraum dar. Sie befindet sich nur kurzzeitig im Verbrennungsraum und kann auch insoweit nicht wesentlich aufheizen.

Der Dichtring kann aus der zur Drehschieberrotationsachse parallelen Ebene gekippt sein und durch unterschiedliche Kugelabschnittsumfänge Relativgeschwindigkeitsdifferenzen an der Dichtkante Drehschieberkugel – Dichtring erzeugen und somit eine Drehung 119 der Dichtung 33b um ihre Rotationsachse ermöglichen, was zu einer erhöhten Standzeit und Dichtfähigkeit der Dichtung führt.

Der Dichtring kann außerdem an den der Drehschieberkugellagerungen nächsten Bereichen mit unterschiedlichen Federkräften auf die Drehschieberkugel wirken, welche eine Umfangskraftdifferenz an der Dichtkante Drehschieberkugel – Dichtring und somit eine Drehung 119 der Dichtung um ihre Rotationsachse bewirken, was ebenfalls zu einer erhöhten Standzeit und Abdichtfähigkeit der Dichtung führt.

Die Brennkraftmaschine kann als Otto-, Diesel- oder Gasmotor ausgeführt sein.

**Patentansprüche**

1. Brennkraftmaschine mit innerer Verbrennung und mit in Reihe angeordneten Zylindern sowie mit mindestens einem rotierenden Kugeldrehschieber (15) für die Gasladungswechselvorgänge, der zwischen dem Zylinderblock (11) und dem Zylinderdeckel (13) mit einer zur Zylinderachse senkrecht liegenden Rotationsachse angeordnet ist und zwischen zwei sich rotationsaxial erstreckenden Lagerzapfen (43, 44) einen mit den Lagerzapfen (43, 44) in fester Verbindung stehenden kugelförmigen Steuerkörper aufweist, wobei jeder Lagerzapfen (43, 44) von einem sich axial erstreckenden Gaskanal (46, 47) durchsetzt ist, der jeweils in einen krümmerförmigen, im Steuerkörper angeordneten Gaskanal übergeht, der an der Oberfläche des Steuerkörpers mit einer Öffnung austritt, und wobei Mittel zur Übertragung einer Rotationsbewegung von der Kurbelwelle auf den Kugeldrehschieber (15) vorhanden sind, dadurch gekennzeichnet, daß der Steuerkörper des Kugeldrehschiebers (15) aus zwei miteinander gasdicht verbundenen kugelhalbschalenförmigen Teilen (40, 41) besteht, mit denen je ein rohrförmiger Lagerzapfen (43, 44) an einander gegenüberliegenden Seiten zentrisch verbunden ist, wobei sich die Teile (40, 41) in der äquatorial angeordneten Trennaht (39) zu einer Hohlkugel ergänzen, wobei die einen Enden (48, 49) der krümmerförmigen Gaskanäle (46, 47) formschlüssig mit den dazugehörigen Öffnungen (50, 51) an der Oberfläche der Hohlkugel verbunden sind, wobei die anderen Enden (53, 54) mit den Lagerzapfen (43, 44) verbunden sind und wobei auf der Gasauslaßseite und auf der Gaseinlaßseite das jeweilige andere Ende (53, 54) den zugehörigen rohrförmigen Lagerzapfen (43, 44) koaxial derart durchsetzt, daß jeweils von der Außenmantelfläche des Gaskanals und der Innenmantelfläche des Lagerzapfens begrenzte Kühlkanäle (56, 57) entstehen.

2. Brennkraftmaschine nach Anspruch 1, dadurch gekennzeichnet, daß auf der Gaseinlaßseite der Gaskanal (46) und der dazugehörige Lagerzapfen (43) eine Baueinheit bilden.

3. Brennkraftmaschine nach Anspruch 1 oder 2, dadurch gekennzeichnet, daß die kugelhalbschalenförmigen Teile (40, 41), die Lagerzapfen (43, 44) und die krümmerförmigen Gaskanäle miteinander verschweißt sind.

4. Brennkraftmaschine nach einem oder mehreren der Ansprüche 1 bis 3, dadurch gekennzeichnet, daß die Zapfen (43, 44) als Lagerzapfen ausgebildet sind und im Zylinderkopf lagern, und daß im Zylinderkopf den Steuerkörper (15) umgebende, kalottenförmige Gegenflächen (25, 27) angeordnet sind, wobei in der dem Zylinder benachbarten Kalottenfläche (27) ein vorzugsweise um seine Achse drehbarer Abdichtungsring (33, 33a, 33b) lagert, der an der Oberfläche des Kugelkörpers (15) anliegt und den Brennraum (95) des Zylinders (11) gegen den Außenraum abdichtet.

5. Brennkraftmaschine nach einem oder mehreren der Ansprüche 1 bis 4, dadurch gekennzeichnet, daß der Zylinderkopf senkrecht zur Zylinderachse zweigeteilt ist und die Teilung durch die Drehachse (90) des Kugeldrehschiebers (15) verläuft.

6. Brennkraftmaschine nach einem oder mehreren der Ansprüche 1 bis 5, dadurch gekennzeichnet, daß im Zylinderkopf mit Ausnahme der Einmündungsbereiche der Lagerzapfen (43, 44) zylinderdeckelseitig eine kalottenförmige bzw. kugelgewölbeförmige Gegenfläche (25) vorgesehen ist und zylinderbohrungsseitig im Zylinderkopf (12) mit Ausnahme der Einmündungsbereiche der Lagerzapfen (43, 44) und der Zylinderbohrung eine kugelgewölbeförmige Gegenfläche (27) angeordnet ist.

7. Brennkraftmaschine nach einem oder mehreren der Ansprüche 1 bis 6, dadurch gekennzeichnet, daß in den Zylinderblock (11) Kühlkanäle (25) eingebracht sind.

8. Brennkraftmaschine nach einem oder mehreren der Ansprüche 1 bis 7, dadurch gekennzeichnet, daß Flanschkappen (21, 22) am Zylinderkopf (12) angesetzt sind, die die Lagerstellen für den Kugeldrehschieber (15), die zwischen dem Zylinderdeckel (13) und dem Zylinderblock (11) angeordnet sind, überdecken.

9. Brennkraftmaschine nach einem oder mehreren der Ansprüche 1 bis 8, dadurch gekennzeichnet, daß der Kolben (17) eine kugelschalenabschnittförmig ausgebildete Stirnfläche (28) aufweist.

10. Brennkraftmaschine nach einem oder mehreren der Ansprüche 1 bis 9, dadurch gekennzeichnet, daß in der Stirnfläche (28) des Kolbens (17) eine sich radial erstreckende Nut (29) eingebracht ist, in die die Elektroden einer im Zylinderblock (11) radial eingeschraubten Zündkerze (30) ragen.

11. Brennkraftmaschine nach Anspruch 10, dadurch gekennzeichnet, daß der Nut (29) eine innerhalb des Kolbenhemdes liegende Kühlrippe (31) zugeordnet ist.

12. Brennkraftmaschine nach einem oder mehreren der Ansprüche 1 bis 11, dadurch gekennzeichnet, daß beiderseits mit gleichem Abstand neben dem Mittelpunkt der Kugel (15) je ein Dichtringabschnitt (34) in einer Nut in der Kugelgewölbefläche (25, 27) lagert, und daß die Dichtleisten (34) sich senkrecht zur Drehachse (90) des Kugeldrehschiebers (15) erstrecken und senkrecht auf die Ebene des Dichtrings (33) stoßen.

13. Brennkraftmaschine nach einem oder mehreren der Ansprüche 1 bis 12, dadurch gekennzeichnet, daß der Kolben (17) eine rotationssymmetrische Ausbildung seiner Stirnfläche (28) aufweist.

14. Brennkraftmaschine nach einem cder mehreren der Ansprüche 1 bis 13, dadurch gekennzeichnet, daß die Querschnitte der in den Öffnungen (50 und 51) mündenden Bereiche der Steuerkanäle (46 und 47) etwa rechteckförmig und der Querschnitt der in den rohrförmigen Lagerzapfen (43 und 44) mündenden Bereiche der Steuerkanäle kreisförmig ausgebildet sind.

15. Brennkraftmaschine nach einem oder mehreren der Ansprüche 1 bis 14, dadurch gekennzeichnet, daß der Lagerzapfen (43) an seinem dem Steuerkörper abgewandten freien Ende einen sich radial erstreckenden Ring (60) und der Lagerzapfen (44) an dem entsprechenden Ende einen sich radial erstreckenden Ring (61) aufweisen, mit denen jeweils die zugeordneten Enden der Steuerkanäle (46, 47) gasdicht verschweißt sind, und daß die Enden (48 und 49) ebenfalls in den Öffnungen (51, 52) der Teile (40, 41) gasdicht verschweißt sind.

16. Brennkraftmaschine nach einem oder mehreren der Ansprüche 1 bis 15, dadurch gekennzeichnet, daß der Lagerzapfen (43) einen an seiner Außenmantelfläche flanschringartig sich radial nach außen erstreckenden ringförmigen Vorsprung (63) mit einem darauf befestigten Zahnkranz (64) mit radial sich erstreckenden Zähnen aufweist, der außerhalb der Lageröffnung (81) angeordnet ist, der mit Antriebsmitteln in Verbindung steht, und daß die Außenmantelfläche des anderen Lagerzapfens (44) einen flanschringartigen, radial sich erstreckenden ringförmigen Vorsprung (65) aufweist, der außerhalb der Lageröffnung (79) angeordnet ist und mit einem Gleitring oder dgl. an der Stirnfläche des Zylinderdeckels (13) und des Zylinderblocks (11) durch den Antrieb bedingt liegt.

17. Brennkraftmaschine nach einem oder mehreren der Ansprüche 1 bis 16, dadurch gekennzeichnet, daß beide Lagerzapfen (43, 44) von mindestens einer Bohrung (67 oder 68) radial durchsetzt sind, so daß die Kühlkanäle (56, 57) über diese Bohrungen mit einem Kühlmittel führenden Kanal (71) und einem Kühlmittel abführenden Kanal (72) kommunizieren.

18. Brennkraftmaschine nach einem oder mehreren der Ansprüche 1 bis 17, dadurch gekennzeichnet, daß die Flanschkappen (21, 22) Gleitringdichtungen (75, 76, 77, 78) lagern.

19. Brennkraftmaschine nach einem oder mehreren der Ansprüche 1 bis 18, dadurch gekennzeichnet, daß der Kugeldrehschieber (15) mittels seiner Lagerzapfen (43, 44) in zylindrischen Lageröffnungen (79, 81) gelagert ist, die zweckmäßigerweise jeweils hälftig im Zylinderblock (11) und hälftig im Zylinderdeckel (13) vorgesehen sind.

20. Brennkraftmaschine nach einem oder mehreren der Ansprüche 1 bis 19, dadurch gekennzeichnet, daß der Zylinderdeckel (13) zweiteilig ausgebildet ist und ein kugelkalottenförmiges Deckeloberteil (92) und ein kugelkalottenringförmiges Deckelunterteil (93) aufweist.

21. Brennkraftmaschine nach Anspruch 20, dadurch gekennzeichnet, daß das Deckelteil (93) eine geneigte seitliche Gewindebohrung (94) aufweist, in die die Zündkerze (30a) eingeschraubt ist, die mit ihren Zündelektroden in einen sich oberhalb der Zylinderbohrung (26) befindlichen Brennraum (95a) ragt, und zwar zwischen der Stirnfläche (28b) des Kolbens (17) und dem Kugeldrehschieber (15).

22. Brennkraftmaschine nach einem oder mehreren der Ansprüche 1 bis 21, dadurch gekennzeichnet, daß zwischen der Kugeloberfläche und den Kugelgewölbeflächen (25, 27) ein Spalt (108) ohne Ölfilm vorgesehen ist.

23. Brennkraftmaschine nach einem oder mehreren der Ansprüche 1 bis 22, dadurch gekennzeichnet, daß der Dichtring (33b) in einer vorzugsweise zur Zylinderachse geneigten Ringnut (97) sitzt, die in die Kalottenfläche (27) des Zylinderdeckelunterteils (93) eingebracht ist.

24. Brennkraftmaschine nach Anspruch 23, dadurch gekennzeichnet, daß der Dichtring (33b) aus hitzebeständigen Werkstoffen mit guten Gleiteigenschaften besteht, in einen Stützkörper (99) derart eingelassen ist, daß er sowohl an der Kugeloberfläche als auch in der schräg zur Zylinderachse angeordneten Ringnut (97) anliegt, sich über Federelemente (100) abstützt und um seine eigene Achse rotieren kann.

25. Brennkraftmaschine nach einem oder mehreren der Ansprüche 1 bis 24, insbesondere nach Anspruch 23 und/oder 24, dadurch gekennzeichnet, daß der Kugeldrehschieber (15) aus Keramikmaterial besteht.

26. Brennkraftmaschine nach einem oder mehreren der Ansprüche 1 bis 24, dadurch gekennzeichnet, daß der kugelförmige Steuerkörper aus Metall besteht und mit keramischem Werkstoff beschichtet ist, insbesondere durch Plasmaspritzen.

27. Brennkraftmaschine nach einem oder mehreren der Ansprüche 23 bis 26, dadurch gekennzeichnet, daß die Axiallagerung des Kugeldrehschiebers (15) durch ein Axiallager (101) gewährleistet wird, das an einer Seite am Zahnrad (64a) anliegt und an der anderen Seite gegen eine Ringkante (103) in der Flanschkappe (21) drückt.

28. Brennkraftmaschine nach Anspruch 26, dadurch gekennzeichnet, daß der Antrieb des Kugeldrehschiebers (15) über ein Schraubenrad (102) übertragen wird, dessen Steigung den Kugeldrehschieber (15) gegen die Kappenkante (103) drückt.

29. Brennkraftmaschine nach einem oder mehreren der Ansprüche 23 bis 27, dadurch gekennzeichnet, daß ein Pumprad (106) innerhalb der Flanschkappe (22) auf dem Lagerzapfen (44) angeordnet ist, das das Kühlmittel durch den Kühlkanal (57) treibt.

30. Brennkraftmaschine insbesondere nach einem oder mehreren der Ansprüche 1 bis 29, dadurch gekennzeichnet, daß eine Zündkerze im mit gleichförmiger Winkelgeschwindigkeit drehenden Steuerkörper angeordnet ist.

31. Brennkraftmaschine insbesondere nach einem oder mehreren der Ansprüche 1 bis 30, bei der eine Zündkerze im mit gleichförmiger Winkelgeschwindigkeit drehenden Steuerkörper angeordnet ist, dadurch gekennzeichnet, daß im Bereich einer Ebene, die durch den Mittelpunkt der Kugel geht, ein Abstand zwischen den Außenwandungen der krümmerförmigen Gaskanäle (46, 47) vorgesehen ist, der einen Zwischenraum schafft, der durch die Zündkerze (110) auf einer Durchmesserlinie durchgriffen wird.

32. Brennkraftmaschine nach Anspruch 31, dadurch gekennzeichnet, daß die Zündkerzenanordnung einen elektrisch leitenden Zündkerzeneinsatzring (111) mit einer Masseelektrode (113) aufweist, in dessen Innenraum zunächst ein Isolierkörper (114) und darin eine Mittelelektrode (112) angeordnet sind, wobei der Einsatzring (111) in ein Metallrohr (115) eingeschraubt ist, das die Kugel auf der Durchmesserlinie durchsetzt und an den jeweiligen Austritten (116) der Kugel aus Metall luftdicht mit der Kugelschale verschweißt ist, und wobei im Rohr (115) sich axial bzw. mittig eine Zündleitung (117) befindet, welche in einer Hülle (118) aus elektrisch isolierendem Werkstoff eingebettet ist, und wobei die Zündleitung (117) am dem Einsatz (111) gegenüberliegenden Ende an der Oberfläche des Steuerkörpers in einem Gleitschuh endet und anderendig mit der Mittelelektrode (112) in Kontakt steht.

33. Brennkraftmaschine nach Anspruch 32, dadurch gekennzeichnet, daß im Zylinderkopfoberteil (13, 92) mit einem Gewinde ein Zündstromübertragungsteil (119) eingeschraubt ist, das aus einer zentralen Zündleitung, einem Isolierkörper darumherum und einem Gehäuse (120) besteht.

34. Brennkraftmaschine nach Anspruch 32 und/oder 33, dadurch gekennzeichnet, daß vom Kugeldrehschieber (15) zu den stationären Bauteilen (11, 11a, 13, 92) ein Schleifring (123) am Flanschring (65) oder am Flanschring (63) angeordnet ist, und daß eine stationärseitig befestigte Bürste (112) dem Schleifring (123) gegenüberliegend vorgesehen ist.

35. Brennkraftmaschine nach einem oder mehreren der Ansprüche 23 bis 34, dadurch gekennzeichnet, daß die Zündkerze während des OT in der Mitte des Brennraums (95) an dessen oberen Begrenzungsfläche angeordnet ist.

36. Brennkraftmaschine nach einem oder mehreren der Ansprüche 30 bis 35, dadurch gekennzeichnet, daß die Zündkerze im Kühlraum des Steuerkörpers (15) angeordnet ist.

37. Brennkraftmaschine nach einem oder mehreren der Ansprüche 1 bis 36, dadurch gekennzeichnet, daß sie über mehrere Zylinder verfügt und über jedem Zylinder ein Kugeldrehschieber (15) angeordnet ist.

38. Brennkraftmaschine nach Anspruch 37, dadurch gekennzeichnet, daß die Zylinder in einer Reihe und die Drehachse der Kugeldrehschieber (15) quer zur Aufreihrichtung der Zylinder angeordnet ist.

39. Brennkraftmaschine nach Anspruch 38, dadurch gekennzeichnet, daß die Drehachse der Kugeldrehschieber (15) senkrecht zur Zylinderachse angeordnet ist.

## Claims

1. Internal combustion engine with cylinders arranged in line and with at least one rotating spherical rotary slide valve (15) for the gas load changing processes which is arranged between the cylinder block (11) and the cylinder cover (13) with an axis of rotation lying perpendicularly to the cylinder axis and, between two bearing journals (43, 44) extending along the axis of rotation, has a spherical control member rigidly connected to the bearing journals (43, 44), wherein each bearing journal (43, 44) is penetrated by an axially extending gas duct (46, 47) which, in each case, passes into a curved gas duct which is arranged in the control member and issues at the surface of the control member with an opening and wherein means are provided for transmitting a rotary motion from the crankshaft to the spherical rotary slide valve (15), characterised in that the control member of the spherical rotary slide valve (15) consists of two hemispherical dish-shaped parts (40, 41) which are joined together in a gas-tight manner and to which a respective tubular bearing journal (43, 44) is centrally connected at mutually opposed sides, wherein the parts (40, 41) in the equatorially arranged seam (39) make up a hollow sphere, wherein the one ends (48, 49) of the curved gas ducts (46, 47) are positively connected to the associated openings (50, 51) at the surface of the hollow sphere, wherein the other ends (53, 54) are connected to the bearing journals (43, 44) and wherein the respective other end (53, 54) on the gas outlet side or on the gas outlet side and on the gas inlet side coaxially passes through the associated tubular bearing journal (43, 44) so as to form respective cooling ducts (56, 57) limited by the external surface of the gas duct and the internal surface of the bearing journal.

2. Internal combustion engine according to claim 1, characterised in that the gas duct (46) and the associated bearing journal (43) form a structural unit on the gas inlet side.

3. Internal combustion engine according to claim 1 or 2, characterised in that the hemispherical dish-shaped parts (40, 41), the bearing journals (43, 44) and the curved gas ducts are welded to one another.

4. Internal combustion engine according to one or more of claims 1 to 3, characterised in that the journals (43, 44) are constructed as bearing journals and are mounted in the cylinder head and in that dome-shaped opposing faces (25, 27) surrounding the control member (15) are arranged in the cylinder head, wherein a sealing ring (33, 33a, 33b), which is preferably rotatable about its axis, rests on the surface of the spherical member (15) and seals the combustion chamber (95) of the cylinder (11) from the external space, is supported in the dome face (27) adjacent to the cylinder.

5. Internal combustion engine according to one or more of claims 1 to 4, characterised in that the cylinder head is split into two parts perpendicularly to the cylinder axis and the split extends through the axis of rotation (90) of the spherical rotary slide valve (15).

6. Internal combustion engine according to one or more of claims 1 to 5, characterised in that in the cylinder head, with the exception of the entrance regions of the bearing journals (43, 44), there is provided, on the cylinder cover side, a dome-shaped or spherically curved opposing face (25) and, on the cylinder bore side in the cylinder head (12), with the exception of the entry regions of the bearing journals (43, 44) and of the cylinder bore, there is arranged a spherically curved opposing face (27).

7. Internal combustion engine according to one or more of claims 1 to 6, characterised in that cooling ducts (25) are introduced into the cylinder block (11).

8. Internal combustion engine according to one or more of claims 1 to 7, characterised in that flange caps (21, 22) are placed on the cylinder head (12) and cover the bearing positions for the spherical rotary slide valve (15) which are arranged between the cylinder cover (13) and the cylinder block (11).

9. Internal combustion engine according to one or more of claims 1 to 8, characterised in that the piston (17) has an end face (28) constructed in the form of a portion of a spherical dish.

10. Internal combustion engine according to one or more of claims 1 to 9, characterised in that a radially extending groove (29), into which the electrodes of a spark plug (30) screwed radially in the cylinder block (11) project, is introduced in the end face (28) of the piston (17).

11. Internal combustion engine according to claim 10, characterised in that the groove (29) is allocated a cooling fin (31) located inside the piston shirt.

12. Internal combustion engine according to one or more of claims 1 to 11, characterised in that on either side with equal spacing next to the centre of the sphere (15) there is mounted a respective sealing ring portion (34) in a groove in the spherical curved face (25, 27) and in that the sealing strips (34) extend perpendicularly to the axis of rotation (90) of the spherical rotary slide valve (15) and perpendicularly strike the plane of the sealing ring (33).

13. Internal combustion engine according to one or more of claims 1 to 12, characterised in that the end face (28) of the piston (17) has a rotationally symmetrical construction.

14. Internal combustion engine according to one or more of claims 1 to 13, characterised in that the cross sections of the regions of the control ducts (46 and 47) merging into the openings (50 and 51) are approximately rectangular and the cross section of the regions of the control ducts merging into the tubular bearing journals (43 and 44) are circular.

15. Internal combustion engine according to one or more of claims 1 to 14, characterised in that the bearing journal (43) has, at its free end remote from the control member, a radially extending ring (60) and the bearing journal (44) has, at the corresponding end, a radially extending ring (61) to which the associated ends of the control channels (46, 47) are welded in a gas-tight manner in each case and in that the ends (48 and 49) are also welded in a gas-tight manner in the openings (51, 52) of the parts (40, 41).

16. Internal combustion engine according to one or more of claims 1 to 15, characterised in that the bearing journal (43) has an annular projection (63) extending radially outward in the manner of a flange ring at its external surface, with a toothed ring (64) which is fixed thereon, has radially extending teeth, is arranged outside the bearing opening (81) and communicates with driving means and in that the external surface of the other bearing journal (44) has a flange ring-like radially extending annular projection (65) which is arranged outside the bearing opening (79) and, while being subject to the drive, lies with a sliding ring or the like on the end face of the cylinder cover (13) and of the cylinder block (11).

17. Internal combustion engine according to one or more of claims 1 to 16, characterised in that the two bearing journals (43, 44) are radially penetrated by at least one bore (67 or 68) so that the cooling ducts (56, 57) communicate via these bores with a coolant guiding duct (71) and a coolant discharge duct (72).

18. Internal combustion engine according to one or more of claims 1 to 17, characterised in that the flange caps (21, 22) support sliding ring seals (75, 76, 77, 78).

19. Internal combustion engine according to one or more of claims 1 to 18, characterised in that the spherical rotary slide valve (15) is mounted by means of its bearing journals (43, 44) in cylindrical bearing openings (79, 81) which are preferably provided half in the cylinder block (11) and half in the cylinder cover (13) in each case.

20. Internal combustion engine according to one or more of claims 1 to 19, characterised in that the cylinder cover (13) is constructed in two parts and has a spherical dome-shaped upper cover part (92) and a spherical dome ring-shaped lower cover part (93).

21. Internal combustion engine according to claim 20, characterised in that the cover part (93) has an inclined lateral threaded bore (94) into which there is screwed the spark plug (30a) which projects with its sparking electrodes into a combustion chamber (95a) located above the cylinder bore (26), more specifically between the end face (28b) of the piston (17) and the spherical rotary slide valve (15).

22. Internal combustion engine according to one or more of claims 1 to 21, characterised in that a gap (108) without an oil film is provided between the spherical surface and the spherical curved surfaces (25, 27).

23. Internal combustion engine according to one or more of claims 1 to 22, characterised in that the sealing ring (33b) rests in an annular groove (97) which is preferably inclined to the cylinder axis and is introduced into the dome face (27) of the lower cylinder cover part (93).

24. Internal combustion engine according to claim 23, characterised in that the sealing ring (33b) consists of heat resistant materials with good sliding properties, is admitted into a supporting member (99) such that it rests both on the spherical surface and in the annular groove (97) arranged obliquely to the cylinder axis, is supported by means of spring elements (100) and can rotate about its own axis.

25. Internal combustion engine according to one or more of claims 1 to 24, in particular according to claim 23 and/or 24, characterised in that the spherical rotary slide valve (15) consists of ceramic material.

26. Internal combustion engine according to one or more of claims 1 to 24, characterised in that the spherical control member consists of metal and is coated with ceramic material, in particular by plasma spraying.

27. Internal combustion engine according to one or more of claims 23 to 26, characterised in that the axial mounting of the spherical rotary slide valve (15) is guaranteed by an axial bearing (101) which, on one side, rests on the gearwheel (64a) and, on the other side, presses against an annular edge (103) in the flange cap (21).

28. Internal combustion engine according to claim 26, characterised in that the drive of the spherical rotary slide valve (15) is transmitted via a helical gearwheel (102) of which the pitch presses the spherical rotary slide valve (15) against the cap edge (103).

29. Internal combustion engine according to one or more of claims 23 to 27, characterised in that a pump wheel (106) is arranged inside the flange cap (22) on the bearing journal (44) and propels the coolant through the cooling duct (57).

30. Internal combustion engine, in particular according to one or more of claims 1 to 29, characterised in that a spark plug is arranged in the control member rotating at a uniform angular velocity.

31. Internal combustion engine in particular according to one or more of claims 1 to 30, in which a spark plug is arranged in the control member rotating at a uniform angular velocity, characterised in that in the region of a plane passing through the centre of the sphere there is provided a space between the external walls of the curved gas ducts (46, 47) which produces an intermediate chamber penetrated by the spark plug (110) on a diameter line.

32. Internal combustion engine according to claim 31, characterised in that the spark plug arrangement has an electrically conductive spark plug insert ring (111) with an earth electrode (113) in whose interior there is initially arranged an insulating member (114) and a central electrode (112) therein, wherein the insert ring (111) is screwed into a metal tube (115) which passes through the sphere on the diameter line and the sphere of metal is welded in an air-tight manner to the spherical dish at the respective outlets (116) and wherein an ignition line (117) which is embedded in a sheath (118) of electrically insulating material is located axially and centrally in the tube (115) and wherein the ignition line (117) ends, at the end opposite the insert (111), at the surface of the control member in a sliding block and, at the other end, is in contact with the central electrode (112).

33. Internal combustion engine according to claim 32, characterised in that an ignition current transmission part (119) consisting of a central ignition line, a surrounding insulating member and a casing (120) is screwed in the upper cylinder head part (13, 92) with a thread.

34. Internal combustion engine according to claim 32 and/or 33, characterised in that from the spherical rotary slide valve (15) to the stationary components (11, 11a, 13, 92) there is arranged a slip ring (123) on the flange ring (65) or on the flange ring (63) and in that a brush (112) fixed on the stationary side is provided opposite the slip ring (123).

35. Internal combustion engine according to one or more of claims 23 to 34, characterised in that the spark plug is arranged, at the TDC, in the centre of the combustion chamber (95) at the upper limiting face thereof.

36. Internal combustion engine according to one or more of claims 30 to 35, characterised in that the spark plug is arranged in the cooling chamber of the control member (15).

37. Internal combustion engine according to one or more of claims 1 to 36, characterised in that it has several cylinders and a spherical rotary slide valve (15) is arranged above each cylinder.

38. Internal combustion engine according to claim 37, characterised in that the cylinders are arranged in a row and the axis of rotation of the spherical rotary slide valve (15) is arranged transversely to the line-up direction of the cylinders.

39. Internal combustion engine according to claim 38, characterised in that the axis of rotation of the spherical rotary slide valve (15) is arranged perpendicularly to the cylinder axis.

**Revendications**

1. Moteur à combustion interne, comprenant des cylindres montés en série, ainsi qu'une vanne sphérique à tiroir rotatif (15) pour les mouvements de gaz disposée entre le bloc cylindre (11) et un couvercle de cylindre (13), son axe de rotation étant disposé perpendiculairement à l'axe du cylindre et présentant, entre deux tourillons (43, 44) qui s'étendent dans l'axe de rotation, un corps de commande sphérique relié fixement à ces tourillons (43, 44), chaque tourillon (43, 44) étant traversé par un canal (46, 47) pour les gaz, s'étendant dans la direction axiale, ce canal devenant un canal coudé disposé dans le corps de commande et débouchant par une ouverture à la surface du corps de commande, des moyens étant prévus pour transmettre un mouvement de rotation du vilbrequin vers la vanne sphérique à tiroir rotatif (15), caractérisé en ce que le corps de commande de la vanne sphérique (15) comprend deux parties hémisphériques (40, 41) reliées l'une à l'autre de manière étanche aux gaz, sur deux côtés opposés desquelles sont respectivement connectés concentriquement deux tourillons tubulaires (43, 44), les parties (40, 41) se complétant le long d'une ligne de séparation (39), disposée équatorialement pour former une sphère creuse, l'une des extrémités (48, 49) des canaux à gaz coudés (46, 47) étant reliée mécaniquement aux ouvertures correspondantes (50, 51) pratiquées dans la surface de la sphère creuse, et les autres extrémités (53, 54) étant reliées aux tourillons (43, 44), l'autre extrémité respective traversant coaxialement, du côté de la sortie des gaz ou des côtés de la sortie et de l'entrée du gaz, le tourillon tubulaire associé (43, 44), de manière à ce que des canaux de refroidissement (56, 57) soient formés, délimités par la face extérieure du canal à gaz et la face intérieure du tourillon.

2. Moteur à combustion interne selon la revendication 1, caractérisé par le fait que, du côté de l'entrée du gaz, le canal (46) et le tourillon (43) associés forment une seule et même pièce.

3. Moteur à combustion interne selon la revendication 1 ou 2, caractérisé en ce que les parties hémisphériques (40, 41), les tourillons (43, 44) et les canaux à gaz coudés sont reliés par soudure.

4. Moteur à combustion interne selon l'une ou plusieurs des revendications 1 à 3, caractérisé par le fait que les tourillons (43, 44) ont là forme de têtons et sont montés dans la culasse et que des contre-surfaces (25, 27), ayant la forme de coupelles qui entourent le corps de commande (15) sont disposées dans la culasse, un anneau d'étanchéité (33, 33a, 33b), de préférence pivotable autour de son axe, étant disposé dans la surface de la coupelle (27) voisine du cylindre, cet anneau étant appliqué sur la surface du corps sphérique (15) et rend étanche la chambre de combustion (95) du cylindre (11) par rapport à l'espace extérieur.

5. Moteur à combustion interne selon l'une ou plusieurs des revendications 1 à 4, caractérisé en ce que la culasse est partagée en deux parties, perpendiculairement à l'axe du cylindre et que cette séparation passe par l'axe de rotation (90) de la vanne sphérique à tiroir rotatif (15).

6. Moteur à combustion interne selon l'une ou plusieurs des revendications 1 à 5, caractérisé par le fait que, dans la culasse, à l'exception des régions où débouchent les tourillons (43, 44), il est prévu, du côté du couvercle du cylindre, une contresurface (25) ayant la forme d'une coupelle ou d'une hémisphère et, du côté de l'alésage du cylindre, dans la culasse (12), à l'exception des régions où débouchent les tourillons (43, 44) et l'alésage, une contre-surface hémisphérique (27).

7. Moteur à combustion interne selon l'une ou plusieurs des revendications 1 à 6, caractérisé en ce que des canaux de refroidissement (23) sont agencés dans le bloc-cylindre (11).

8. Moteur à combustion interne selon l'une ou plusieurs des revendications 1 à 7, caractérisé par le fait que des chapeaux à brides (21, 22) sont fixés sur la culasse (12) et recouvrent les points de montage de la vanne sphérique à tiroir rotatif (15) disposés entre le couvercle (13) du cylindre et lindre (11).

9. Moteur à combustion interne selon l'une ou plusieurs des revendications 1 à 8, caractérisé en ce que le piston (17) possède une face frontale (28) ayant la forme d'une section de coupelle.

10. Moteur à combustion interne selon l'une ou plusieurs des revendications 1 à 9, caractérisé en ce qu'il est prévu dans la face frontale (28) du piston (17) une rainure radiale (29) dans laquelle pénètrent les électrodes d'une bougie (30) vissée radialement dans le bloc-cylindre (11).

11. Moteur à combustion interne selon la revendication 10, caractérisé en ce qu'une nervure de refroidissement (31), disposée à l'intérieur de la chemise du piston est associée à la rainure (29).

12. Moteur à combustion interne selon l'une ou plusieurs des revendications 1 à 11, caractérisé en ce que, des deux côtés et à égale distance du centre de la sphère (15), une portion d'anneau d'étanchéité (34) repose dans une rainure de la surface sphérique (25, 27) et que les barrettes d'étanchéité (34) s'étendent perpendiculairement à l'axe de rotation (90) de la vanne sphérique à tiroir rotatif (15) et rencontrent perpendiculairement le plan de l'anneau d'étanchéité (33).

13. Moteur à combustion interne selon l'une ou plusieurs des revendications 1 à 12, caractérisé en ce que le piston (17) présente une surface frontale (28) symétrique en rotation.

14. Moteur à combustion interne selon l'une ou plusieurs des revendications 1 à 13, caractérisé par le fait que les sections transversales des portions des canaux de commande (46 et 47) débouchant dans les ouvertures (50 et 51) sont sensiblement rectangulaires et que la section transversale des portions des canaux de commande débouchant dans le tourillon tubulaire (43 et 44) est circulaire.

15. Moteur à combustion interne selon l'une ou plusieurs des revendications 1 à 14, caractérisé par le fait que le tourillon (43) possède sur son extrémité libre opposée au corps de commande un anneau (60) s'étendant radialement et que le tourillon (44) présente sur l'extrémité correspondante un anneau (61) s'étendant radialement avec lesquels les extrémités respectives associées des canaux de commande (46, 47) sont reliées par soudure de manière étanche aux gaz et que les extrémités (48 et 49) sont également ment soudées dans les ouvertures (51, 52) des parties (40, 41) de manière étanche aux gaz.

16. Moteur à combustion interne selon l'une ou plusieurs des revendications 1 à 15, caractérisé par le fait que le tourillon (43) présente une saillie annulaire (63) qui s'étend radialement vers l'extérieur depuis la face extérieure de son enveloppe à la manière d'un collier sur lequel est fixée une couronne dentée (64) dont les dents s'étendent radialement, cette saillie étant disposée à l'extérieur de l'ouverture-palier (81) et reliée à des moyens d'entraînement, et que la face extérieure de l'enveloppe de l'autre tourillon (44) possède une saillie annulaire (65) en forme de collier s'étendant radialement et disposée à l'extérieur de l'ouverture-palier (79) et qui, de par l'entraînement prévu, est en contact avec la face frontale du couvercle de cylindre (13) et du bloc-cylindre, au moyen d'un anneau glissant ou analogue.

17. Moteur à combustion interne selon l'une ou plusieurs des revendications 1 à 16, caractérisé par le fait que les deux tourillons (43, 44) sont radialement traversés par au moins un alésage (67 ou 68), les canaux de refroidissement (56, 57) communiquant par ces alésages avec un canal (71) d'amenée de l'agent de refroidissement et un canal (72) d'évacuation de l'agent de refroidissement.

18. Moteur à combustion interne selon l'une ou plusieurs des revendications 1 à 17, caractérisé en ce que les chapeaux bridés (21, 22) supportent des garnitures étanches à anneau glissant (75, 76, 77, 78).

19. Moteur à combustion interne selon l'une ou plusieurs des revendications 1 à 18, caractérisé par le fait que la vanne sphérique à tiroir rotatif (15) repose par ses tourillons (43, 44) dans des ouvertures-paliers cylindriques (79, 81) qui sont avantageusement prévues respectivement par moitié dans le bloc-cylindre (11) et par moitié dans le couvercle de cylindre (13).

20. Moteur à combustion interne selon l'une ou plusieurs des revendications 1 à 19, caractérisé par le fait que le couvercle de cylindre (13) est formé en deux parties et présente une partie supérieure (92) hémisphérique et une partie inférieure (93) ayant la forme d'un anneau d'hémisphère.

21. Moteur à combustion interne selon la revendication 20, caractérisé par le fait que la partie de couvercle (93) présente un alésage fileté latéral oblique (94) dans lequel est vissée la bougie (30a) dont les électrodes d'alumage font saillie dans une chambre de combustion (95a) située au-dessus de l'alésage (26), à savoir entre la face frontale (28b) du piston (17) et la vanne sphérique à tiroir rotatif (15).

22. Moteur à combustion interne selon l'une ou plusieurs des revendications 1 à 21, caractérisé par le fait qu'entre la surface de la sphère et les faces (25, 27) de la voûte sphérique il est prévue une fente (102) sans film d'huile.

23. Moteur à combustion interne selon l'une ou plusieurs des revendications 1 à 22, caractérisé par le fait que l'anneau d'étanchéité (33b) repose dans une rainure annulaire (97), de préférence inclinée par rapport à l'axe du cylindre et qui a été réalisée dans la surface hémisphérique (27) de la partie inférieure (93) du couvercle de cylindre.

24. Moteur à combustion interne selon la revendication 23, caractérisé par le fait que l'anneau d'étanchéité (33b) est réalisé dans des matières thermorésistantes possédant de bonnes qualités de glissement, qu'il est inséré dans un corps de soutien (99) de manière à être en contact aussi bien avec la surface de la sphère qu'avec la rainure annulaire (97) disposée obliquement par rapport à l'axe du cylindre, qu'il est monté sur des éléments élastiques (100) et peut tourner autour de son propre axe.

25. Moteur à combustion interne selon l'une ou plusieurs des revendications 1 à 24, en particulier selon la revendication 23 et/ou 24, caractérisé par le fait que la vanne sphérique à tiroir rotatif (15) est réalisée dans une matière céramique.

26. Moteur à combustion interne selon l'une ou plusieurs des revendications 1 à 24, caractérisé par le fait que le corps de commande sphérique est en métal et revêtu d'une matière céramique, en particlulier par pulvérisation de plasma.

27. Moteur à combustion interne selon l'une ou plusieurs des revendications 23 à 26, caractérisé par le fait que le montage axial de la vanne sphérique à tiroir rotatif (15) est garanti par un coussinet axial (101) qui est appliqué d'un côté sur la roue dentée (64a) et de l'autre côté, contre un bord annulaire (103) du chapeau à brides (21).

28. Moteur à combustion interne selon la revendication 26, caractérisé par le fait que l'entraînement de la vanne sphérique à tiroir rotatif (15) est transmis par une roue hélicoïdale (102) dont le pas pousse la vanne (15) contre le bord (103) du chapeau.

29. Moteur à combustion interne selon l'une ou plusieurs des revendications 23 à 27, caractérisé par le fait qu'une roue de pompage (106) qui fait circuler l'agent de refroidissement à travers le canal de refroidissement (57) est disposée sur le tourillon (44) à l'intérieur du chapeau à brides (22).

30. Moteur à combustion interne, en particulier selon l'une ou plusieurs des revendications 1 à 29, caractérisé par le fait qu'une bougie est disposée dans le corps de commande qui tourne à vitesse angulaire constante.

31. Moteur à combustion interne selon l'une ou plusieurs des revendications 1 à 30, dans lequel une bougie est disposée dans le corps de commande qui tourne à vitesse angulaire constante, caractérisé par le fait que, dans la région d'un plan passant par le centre de la sphère, il est prévue une distance entre les parois extérieures des canaux à gaz coudés (46, 47) qui ménage un intervalle traversé par la bougie (110) sur une ligne diamétrale.

32. Moteur à combustion interne selon la revendication 31, caractérisé par le fait que l'agencement de la bougie présente un anneau intercalaire (111) électriquement conducteur muni d'une électrode de masse (113) dans l'espace intérieur duquel est disposé d'abord, un corps isolant (114) et à l'intérieur de celui-ci, une électrode médiane (112), l'anneau (111) étant vissé dans un tube métallique (115) qui traverse la sphère sur la ligne diamétrale et est relié par soudure de manière étanche à l'air avec la coupelle sphérique en métal aux débouchures respectives (116), un conduit d'allumage (117) étant disposé axialement ou centralement dans le tube (115), ce conduit (117) étant placé dans une enveloppe (118) réalisée dans une matière électriquement isolante et se terminant à l'extrémité opposée à l'anneau (111) sur la surface du corps de commande en un patin glissant et étant, à l'autre extrémité, en contact avec l'électrode médiane (112).

33. Moteur à combustion interne selon la revendication 32, caractérisé par le fait que, dans la portion supérieure de la culasse (13, 92), un élément (119) de transmission du courant d'allumage est vissé par son filet, cet élément comprenant un conduit central d'allumage, un corps isolant qui l'entoure et un boîtier (120).

34. Moteur à combustion interne selon la revendication 32 et/ou 33, caractérisé par le fait qu'entre la vanne sphérique à tiroir rotatif (15) et les éléments fixes (11, 11a, 13, 92), une bague (123) glissant de l'une à l'autre est disposée sur le collier (65) ou (63) et qu'un balai (122), fixé du côté des éléments stationnaires, est prévue en regard de la bague glissante (123).

35. Moteur à combustion interne selon l'une ou plusieurs des revendications 23 à 34, caractérisé par le fait que la bougie est disposée, au cours du point mort supérieur au centre de la chambre de combustion (95) sur sa face supérieure de limitation.

36. Moteur à combustion interne selon l'une ou plusieurs des revendications 30 à 35, caractérisé par le fait que la bougie est disposée dans l'espace de refroidissement du corps de commande (15).

37. Moteur à combustion interne selon l'une ou plusieurs des revendications 1 à 36, caractérisé par le fait qu'il possède plusieurs cylindres et qu'une vanne sphérique à tiroir rotatif (15) est disposée au-dessus de chaque cylindre.

38. Moteur à combustion interne selon la revendication 37, caractérisé par le fait que les cylindres sont disposés en ligne et que l'axe de rotation des vannes sphériques à tiroir rotatif (15) est disposé transversalement par rapport à la direction d'alignement des cylindres.

39. Moteur à combustion interne selon la revendication 38, caractérisé par le fait que l'axe de rotation des vannes sphériques à tiroir rotatif (15) est disposé perpendiculairement par rapport à l'axe des cylindres.

Fig 1

Fig 2

Schnitt II-II

Fig. 2a

Fig. 2b

Fig. 2c

Fig. 2d

Fig. 2e

Fig. 3

Fig. 4

Fig. 5

EP 0 222 260 B1

| Motortyp | 2-Ventil-motor | 4-Ventil-motor | Kugeldreh-schiebermotor |
|---|---|---|---|
| max. Öffnungs-querschnitt [mm$^2$] | 731 | 790 | 920. |
| max. Öffnungs-querschnitt Vergleichszahlen [%] ⊗ | 100 | 108 | 126 |
| Zeitquerschnitt [mm$^2$ °KW] | 66 480 | 102 030 | 149 960 |
| Zeitquerschnitt Vergleichszahlen [%] ⊗ | 100 | 153 | 226 |

⊗ Bezugsgröße: 2-Ventilmotor

Fig. 6

Fig. 7

Fig. 8

46
43
34
15
44
57
110
118
57
117
116
119
114
33b
113
109
112
115
111
68
90